(19)

**Europäisches Patentamt**
**European Patent Office**
**Office européen des brevets**

(11) **EP 4 647 312 A1**

(12) **EUROPEAN PATENT APPLICATION**

(43) Date of publication:
**12.11.2025   Bulletin 2025/46**

(21) Application number: **25170041.5**

(22) Date of filing: **11.04.2025**

(51) International Patent Classification (IPC):
**B60W 30/16** (2020.01)      **B60W 30/18** (2012.01)
**B60W 50/02** (2012.01)      **B60W 60/00** (2020.01)

(52) Cooperative Patent Classification (CPC):
**B60W 30/18163; B60W 30/16; B60W 60/0015;**
**B60W 60/0018;** B60W 50/0205; B60W 2050/021;
B60W 2050/0215; B60W 2554/802; B60W 2754/30

(84) Designated Contracting States:
**AL AT BE BG CH CY CZ DE DK EE ES FI FR GB**
**GR HR HU IE IS IT LI LT LU LV MC ME MK MT NL**
**NO PL PT RO RS SE SI SK SM TR**
Designated Extension States:
**BA**
Designated Validation States:
**GE KH LA MA MD TN**

(30) Priority: **11.04.2024   KR 20240048935**
**15.02.2025   KR 20250006104**

(71) Applicants:
• **Hyundai Motor Company**
  **Seoul 06797 (KR)**
• **Kia Corporation**
  **Seoul 06797 (KR)**

(72) Inventors:
• **LEE, Jin Ug**
  **18280 Hwaseong-si, Gyeonggi-do (KR)**
• **MIN, Young Bin**
  **18280 Hwaseong-si, Gyeonggi-do (KR)**
• **PARK, Jong Sung**
  **18280 Hwaseong-si, Gyeonggi-do (KR)**
• **SONG, Moon Hyung**
  **18280 Hwaseong-si, Gyeonggi-do (KR)**

(74) Representative: **Hoffmann Eitle**
**Patent- und Rechtsanwälte PartmbB**
**Arabellastraße 30**
**81925 München (DE)**

(54) **METHOD AND APPARATUS FOR CONTROLLING MINIMAL RISK MANEUVER**

(57)   An apparatus of a vehicle may comprise a processor and a memory storing at least one instruction that, when executed by the processor communicating with the memory, is configured to cause the apparatus to obtain, using a sensor, vehicle state information of the vehicle and surrounding environment information of the vehicle, determine a present vehicle-to-vehicle distance and a required vehicle-to-vehicle distance, generate, based on the present vehicle-to-vehicle distance and the required vehicle-to-vehicle distance, a lane change control signal comprising a first control signal or a second control signal, and control, based on the lane change control signal, driving of the vehicle.

*100*

LANE CHANGE APPARATUS

SENSOR UNIT — *110*

PROCESSOR — *130*

HMI — *140*

TRANSCEIVER — *150*

LAMP — *160*

**FIG. 1**

EP 4 647 312 A1

**Description**

CROSS-REFERENCE TO RELATED APPLICATION

The present application claims the benefit of priority under 35 USC § 119 of Korean Patent Application No. 10-2024-0048935 filed on April 11, 2024 and Korean Patent Application No. 10-2025-0006104 filed on January 15, 2025, in the Korean Intellectual Property Office, the entire disclosures of which are incorporated herein by reference for all purposes.

TECHNICAL FIELD

The present disclosure relates to a method and apparatus for controlling a minimal risk maneuver.

BACKGROUND

The matters described in this Background section are only for enhancement of understanding of the background of the disclosure, and should not be taken as acknowledgment that they correspond to prior art already known to those skilled in the art.

An advanced driver assistance system (ADAS) is being developed to assist driving of a driver. The ADAS is also called an autonomous driving or ADS (Automated Driving System).

When a vehicle performs autonomous driving, various issues may occur. For example, there may be issues with the vehicle itself. For example, issues may arise in the surrounding environment of the vehicle, such as weather or road conditions. In the event of an issue while performing autonomous driving, an apparatus or control method for performing a minimum risk maneuver (MRM), such as changing lanes or stopping the vehicle, may be required.

SUMMARY

According to the present disclosure, an apparatus of a vehicle, the apparatus may comprise a processor, and a memory storing at least one instruction that, when executed by the processor communicating with the memory, is configured to cause the apparatus to: obtain, using a sensor, vehicle state information of the vehicle and surrounding environment information of the vehicle, determine, based on the vehicle state information and the surrounding environment information, a present vehicle-to-vehicle distance and a required vehicle-to-vehicle distance, wherein the present vehicle-to-vehicle distance is a present distance between the vehicle and another vehicle, and wherein the required vehicle-to-vehicle distance is a threshold distance, between the vehicle and the other vehicle, required for the vehicle to perform a lane change to a target lane, generate, based on the present vehicle-to-vehicle distance and the required vehicle-to-vehicle distance, a lane change control signal, wherein the lane change control signal may comprise a first control signal generated based on an occurrence of a predefined event, or a second control signal generated based on an absence of the predefined event, and control, based on the lane change control signal, driving of the vehicle.

The apparatus, wherein the at least one instruction, when executed by the processor communicating with the memory, is configured to cause the apparatus to determine the required vehicle-to-vehicle distance, by setting, based on the first control signal, a first required vehicle-to-vehicle distance to be the required vehicle-to-vehicle distance, or by setting, based on the second control signal, a second required vehicle-to-vehicle distance to be the required vehicle-to-vehicle distance, wherein the first required vehicle-to-vehicle distance is shorter than the second required vehicle-to-vehicle distance.

The apparatus, wherein the at least one instruction, when executed by the processor communicating with the memory, is configured to cause the apparatus to: set a reaction distance, wherein the reaction distance corresponds to a first reaction distance associated with the first control signal or a second reaction distance associated with the second control signal, and wherein the first reaction distance is shorter than the second reaction distance, and set, based on a sum of the reaction distance, a braking distance, and a safety distance, the required vehicle-to-vehicle distance, and wherein the reaction distance is a distance by which a gap between the vehicle and the other vehicle is reduced from a point the vehicle begins to move laterally until the other vehicle starts braking, the braking distance is a distance by which a gap between the vehicle and the other vehicle is reduced while the other vehicle is braking, and the safety distance is a distance between the vehicle and the other vehicle at a time when the braking of the other vehicle is completed.

The apparatus, wherein the at least one instruction, when executed by the processor communicating with the memory, is configured to cause the apparatus to: set a safety distance, wherein the safety distance corresponds to a first safety distance associated with the first control signal or a second safety distance associated with the second control signal, and wherein the first safety distance is shorter than the second safety distance, and set, based on a sum of a reaction distance, a braking distance, and the safety distance, the required vehicle-to-vehicle distance, and wherein the reaction distance is a distance by which a gap between the vehicle and the other vehicle is reduced from a point the vehicle begins to move laterally until the other vehicle starts braking, the braking distance is a distance by which a gap between the vehicle and the other vehicle is reduced while the other vehicle is braking, and the safety distance is a distance between the vehicle and the other vehicle at a time when the braking of the other vehicle is completed.

The apparatus wherein, the at least one instruction, when executed by the processor communicating with the memory, is configured to cause the apparatus to set, based on the occurrence of the predefined event, the braking distance as the required vehicle-to-vehicle distance.

The apparatus, wherein the lane change may comprise a traffic lane change in which the vehicle moves from a current lane to an adjacent lane, and a shoulder change in which the vehicle moves from the current lane to a shoulder, and wherein based on the occurrence of the predefined event, the at least one instruction, when executed by the processor communicating with the memory, is configured to cause the apparatus to determine, based on a signal of the sensor, whether to perform the traffic lane change or the shoulder change, and based on a determination to perform the traffic lane change, adjust a lateral acceleration of the vehicle differently based on the present vehicle-to-vehicle distance while performing the traffic lane change.

The apparatus wherein, based on the other vehicle driving at a speed lower than or equal to a reference speed value, the at least one instruction, when executed by the processor communicating with the memory, is configured to cause the apparatus to adjust the lateral acceleration of the vehicle to a value lower than or equal to a first acceleration while performing the traffic lane change.

The apparatus wherein, based on the other vehicle driving at a speed exceeding the reference speed value, the at least one instruction, when executed by the processor communicating with the memory, is configured to cause the apparatus to adjust the lateral acceleration of the vehicle to a value lower than or equal to a second acceleration while performing the traffic lane change, and wherein the second acceleration has a value greater than the first acceleration.

The apparatus, wherein the lane change may comprise a traffic lane change in which the vehicle moves from a current lane to an adjacent lane, and a shoulder change in which the vehicle moves from the current lane to a shoulder, and wherein based on the occurrence of the predefined event, the at least one instruction, when executed by the processor communicating with the memory, is configured to cause the apparatus to determine, based on a signal of the sensor, whether to perform the traffic lane change or the shoulder change, and based on a determination to perform the shoulder change, set a stop target point on the shoulder and set an expected moving path to the stop target point.

The apparatus wherein, based on a failure of the setting of the stop target point or the setting of the expected moving path, the at least one instruction, when executed by the processor communicating with the memory, is configured to cause the apparatus to control the vehicle to perform a straight stop or an in-lane stop.

According to the present disclosure, a method performed by an apparatus of a vehicle, the method may comprise obtaining, using a sensor, vehicle state information of the vehicle and surrounding environment information of the vehicle, determining, based on the vehicle state information and the surrounding environment information, a present vehicle-to-vehicle distance and a required vehicle-to-vehicle distance, wherein the present vehicle-to-vehicle distance is a present distance between the vehicle and another vehicle, and wherein the required vehicle-to-vehicle distance is a threshold distance, between the vehicle and the other vehicle, required for the vehicle to perform a lane change to a target lane, generating, based on the present vehicle-to-vehicle distance and the required vehicle-to-vehicle distance, a lane change control signal, wherein the lane change control signal may comprise a first control signal generated based on an occurrence of a predefined event, or a second control signal generated based on an absence of the predefined event, and controlling, based on the lane change control signal, driving of the vehicle.

The method, wherein the determining the required vehicle-to-vehicle distance may comprise setting, based on the first control signal, a first required vehicle-to-vehicle distance to be the required vehicle-to-vehicle distance, or setting, based on the second control signal, a second required vehicle-to-vehicle distance to be the required vehicle-to-vehicle distance, wherein the first required vehicle-to-vehicle distance is shorter than the second required vehicle-to-vehicle distance.

According to the present disclosure, an apparatus may comprise a processor, and a memory storing at least one instruction that, when executed by the processor communicating with the memory, is configured to cause the apparatus to detect an event affecting autonomous driving of a vehicle, determine, based on the event, a target lane for a lane change, adjust, based on an occurrence of the event, a required inter-vehicle distance, generate, based on a measured inter-vehicle distance satisfying the required inter-vehicle distance, an autonomous driving control signal, and control, based on the autonomous driving control signal, the autonomous driving of the vehicle to perform the lane change.

The apparatus, wherein the target lane may comprise a shoulder lane, and the autonomous driving control signal is configured to cause the vehicle to stop at a target point on the shoulder lane.

The apparatus, wherein the at least one instruction that, when executed by the processor communicating with the memory, is configured to cause the apparatus to adjust the required inter-vehicle distance by reducing at least one of a reaction distance, a braking distance, or a safety distance.

The apparatus, wherein the at least one instruction that, when executed by the processor communicating with the memory, is configured to cause the apparatus to generate the autonomous driving control signal based on a multi-phase lane change process, wherein the multi-phase lane change process may comprise an initiation phase, a partial lateral movement phase, and a completion phase.

The apparatus, wherein the at least one instruction that, when executed by the processor communicating with the memory, is configured to cause the apparatus to generate the autonomous driving control signal based on a speed of another vehicle within a threshold distance from the vehicle.

The apparatus, wherein the event may comprise at least one of a sensor malfunction, degradation of driving function, detection of an out-of-design-domain condition, or lack of driver responsiveness.

The apparatus, wherein the at least one instruction that, when executed by the processor communicating with the memory, is configured to cause the apparatus to perform a fallback maneuver based on a determination that the lane change cannot be completed, wherein the fallback maneuver may comprise at least one of an in-lane stop or a straight stop.

The apparatus, wherein the at least one instruction that, when executed by the processor communicating with the memory, is configured to cause the apparatus to activate, based on a current phase of the lane change, a turn indicator or an emergency flasher.

BRIEF DESCRIPTION OF THE DRAWINGS

FIG. 1 shows an example of a lane change apparatus according to an example of the present disclosure.
FIG. 2A shows an example of a straight stop according to an example of the present disclosure.
FIG. 2B shows an example of an in-lane stop according to an example of the present disclosure.
FIG. 2C shows an example of a half-shoulder stop according to an example of the present disclosure.
FIG. 2D shows an example of a full-shoulder stop according to an example of the present disclosure.
FIG. 3 shows an example of a traffic lane change according to an example of the present disclosure.
FIG. 4 shows an example of a shoulder change according to an example of the present disclosure.
FIG. 5 shows an example of a present vehicle-to-vehicle distance according to an example of the present disclosure.
FIG. 6 shows an example of each process of a lane change according to an example of the present disclosure.
FIG. 7A, FIG. 7B, FIG. 7C, and FIG. 7D show an example of a required vehicle-to-vehicle distance according to an example of the present disclosure.
FIG. 8 show an example of a method for controlling a lane change apparatus according to an example of the present disclosure.
FIG. 9 show an example of a minimal risk maneuver method performed when an event occurs according to an example of the present disclosure.
FIG. 10 shows an exemplary computing device capable of being used to implement the method or apparatus according to an example of the present disclosure.

DETAILED DESCRIPTION

Hereinafter, examples of the present disclosure are described in detail with reference to the accompanying drawings. In the following description, like reference numerals designate like elements, although the elements are shown in different drawings. Further, in the following description of some examples, a detailed description of known functions and configurations incorporated therein has been omitted for the purpose of clarity and for brevity.

Additionally, various terms such as first, second, A, B, (a), (b), etc., are used solely to differentiate one component from the other but not to imply or suggest the substances, order, or sequence of the components. Throughout the present disclosure, when a part 'includes' or 'comprises' a component, the part is intended to further include other components and not intended to exclude other components unless specifically stated to the contrary. The terms such as 'unit', 'module', and the like refer to one or more units for processing at least one function or operation, which may be implemented by hardware, software, or a combination thereof.

The term "module" or "unit" used in the specification means a software and/or hardware component, and the "module" or "unit" performs certain operations/functions/roles. However, the "module" or "unit" is not construed as being limited to software or hardware. The "module" or "unit" may be configured to be in an addressable storage medium or to execute one or more processors. Therefore, as an example, the "module" or "unit" may include at least one of components such as software components, object-oriented software components, class components, and task components, processes, functions, attributes, procedures, sub-routines, segments of program codes, drivers, firmware, micro-codes, circuits, data, databases, data structures, tables, arrays, or variables. Functions provided in the components, "modules", or "units" may be combined into a smaller number of components, "modules", or "units" or further divided into additional components, "modules", or "units".

In the present disclosure, the "module" or "unit" may be realized as a processor and a memory. The "processor" should be widely construed to include a general-purpose processor, a central processing unit (CPU), a microprocessor, a digital signal processor (DSP), a microcontroller, a state machine, or the like. In some environments, the "processor" may refer to an application-specific integrated circuit (ASIC), a programmable logic device (PLD), or a field-programmable gate array (FPGA), and the like. For example, the "processor" may refer to a combination of processing devices such as a combination of a DSP and a microprocessor, a combination of a plurality of microprocessors, a combination of one or more microprocessors combined with a DSP core, or any other such combination. Moreover, the "memory" should be widely construed to include any electronic component capable of storing electronic information. The "memory" may refer to various types of processor-readable medium such as a random access memory (RAM), a read only memory (ROM), a non-volatile random access memory (NVRAM), a programmable read only memory (PROM), an erasable programmable read only memory (EPROM), an electrically erasable programmable read only memory (EEPROM), a flash memory, a magnetic or optical data storage device, and registers. When the processor can read information from a memory and/or record the information in the memory, the memory may be in a state of electronic communication with a processor. Memory integrated into a processor is in a state of electronic communication with the processor.

The one or more features described herein may be provided as a computer program stored in a computer-readable recording medium in order to be executed on a computer. The medium may either continuously store a computer-executable program or temporarily store the program for execution or download. Furthermore, the medium may be a variety of recording or storage means in the form of a single hardware device or multiple combined hardware devices, and is not limited to media directly connected to some computer system but may also be distributed across a network. Examples of such media include magnetic media such as a hard disk, a floppy disk, or a magnetic tape, optical recording media such as a CD-ROM or a DVD, magneto-optical media such as a floptical disk, and a ROM, RAM, or flash memory, among others, configured to store program instructions. Additional examples of such media include media or storage media that are managed by an app store that distributes applications or by various other sites or servers that provide or distribute software.

In a hardware implementation, processing units used for performing the techniques may be implemented within one or more ASICs, DSPs, digital signal processing devices, programmable logic devices, field-programmable gate arrays, processors, controllers, microcontrollers, microprocessors, electronic devices, or computers or combinations thereof designed to perform the functions described in the present disclosure.

Each element of the apparatus or method in accordance with the present disclosure may be implemented in hardware, software, or a combination of hardware and software. The functions of the respective elements may be implemented in software, and a microprocessor may be implemented to execute the software functions corresponding to the respective elements. When a controller, module, component, device, element, or the like of the present disclosure is described as having a purpose or performing an operation, function, or the like, the controller, module, component, device, element, or the like should be considered herein as being "configured to" meet that purpose or to perform that operation or function. Each controller, module, component, device, element, and the like may separately embody or be included with a processor and a memory, such as a non-transitory computer readable media, as part of the apparatus.

For purposes of this application and the claims, using the exemplary phrase "at least one of: A; B; or C" or "at least one of A, B, or C," the phrase means "at least one A, or at least one B, or at least one C, or any combination of at least one A, at least one B, and at least one C. Further, exemplary phrases, such as "A, B, or C", "at least one of A, B, and C", "at least one of A, B, or C", etc. as used herein may mean each listed item or all possible combinations of the listed items. For example, "at least one of A or B" may refer to (1) at least one A; (2) at least one B; or (3) at least one A and at least one B.

In an example of the present disclosure, although the description is based on right-hand traffic (RHT), a lane change apparatus 100 according to an example of the present disclosure may also be applied to left-hand traffic (LHT).

The terms used herein may be defined as follows.

A vehicle is equipped with an automated driving system (ADS) and thus may be autonomously driven. For example, the vehicle may perform at least one of steering, acceleration, deceleration, lane change, braking or stopping without a driver's manipulation by the ADS. The ADS may include, for example, at least one of pedestrian detection and collision mitigation system (PDCMS), lane change decision aid system (LCAS), lane departure warning system (LDWS), adaptive cruise control (ACC), lane keeping assistance system (LKAS), road boundary departure prevention system (RBDPS), curve speed warning system (CSWS), forward vehicle collision warning system (FVCWS), or low speed following (LSF).

A user (or a driver) is a person who uses a vehicle and is provided with a service of an autonomous driving system.

A vehicle control authority (or a vehicle control right) may control at least one component of the vehicle and/or at least one function of the vehicle. The function of the vehicle may include at least one of a steering function, an acceleration function, a deceleration function, a braking function, a lane change function, a line detection function, a lateral control function, an object (or an obstacle) recognition and distance detection function, a powertrain control function, a safety zone detection function, an engine on/off function, a power on/off function, or a vehicle lock/unlock function. The listed functions of the vehicle are merely examples for understanding, and examples of the present disclosure are not limited thereto.

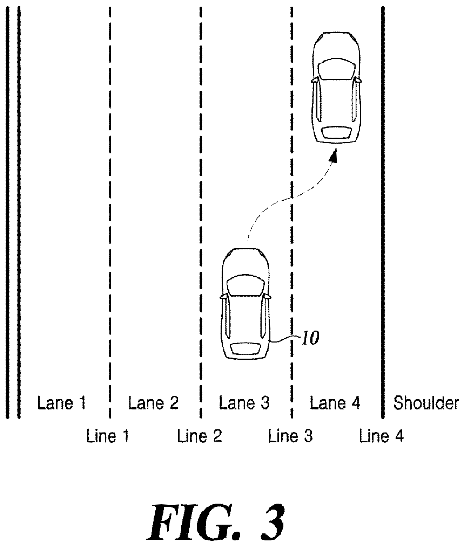

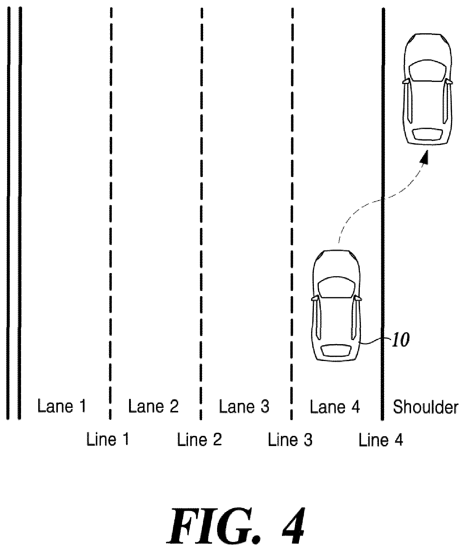

A lane is an area of a road where a vehicle is driven, and refers to a space divided so that a vehicle is driven in a line. For example, FIGS. 3 and 4 illustrate four lanes (lane 1 to lane 4), which are merely examples for understanding. The number, width, shape and type of lanes that may be applied to the apparatus 100 according to an example of the present disclosure are not limited to the drawings.

A current lane refers to a lane in which a vehicle is driving in real time. For example, when an subject vehicle is driving on lane 2, the current lane for the subject vehicle is lane 2.

An adjacent lane is a lane that meets the current lane. For example, in a road with a plurality of lanes, when the current lane is lane 1, the adjacent lane may be lane 2. For example, when the current lane is lane 2, the adjacent lanes may be lanes 1 and 3.

A line refers to a line that distinguishes between different lanes. For example, FIG. 3 illustrates four lines (line 1 to line 4). Herein, line 1 distinguishes the areas of lane 1 and lane 2, line 2 distinguishes the areas of lane 2 and lane 3, line 3 distinguishes the areas of lane 3 and lane 4, and line 4 distinguishes the areas of lane 4 and a shoulder.

A shoulder refers to a way located at the edge of the road. The shoulder is a way configured so that a vehicle may be stopped in the event of an emergency or an emergency vehicle (for example, an ambulance or a police car) may move fast. The shoulder used herein may be used as a concept including safe zones such as rest areas, pocket lanes, and preset areas on a road.

The drawings of the present disclosure illustrate the examples of lanes, lines, and shoulders, which are merely examples for understanding. The width, shape, number and type of lanes, lines, and shoulders that may be applied to the apparatus 100 according to an example of the present disclosure are not limited to the drawings.

An automation level of an autonomous driving vehicle may be classified as follows, according to the American Society of Automotive Engineers (SAE). At autonomous driving level 0, the SAE classification standard may correspond to "no automation," in which an autonomous driving system is temporarily involved in emergency situations (e.g., automatic emergency braking) and/or provides warnings only (e.g., blind spot warning, lane departure warning, etc.), and a driver is expected to operate the vehicle. At autonomous driving level 1, the SAE classification standard may correspond to "driver assistance," in which the system performs some driving functions (e.g., steering, acceleration, brake, lane centering, adaptive cruise control, etc.) while the driver operates the vehicle in a normal operation section, and the driver is expected to determine an operation state and/or timing of the system, perform other driving functions, and cope with (e.g., resolve) emergency situations. At autonomous driving level 2, the SAE classification standard may correspond to "partial automation," in which the system performs steering, acceleration, and/or braking under the supervision of the driver, and the driver is expected to determine an operation state and/or timing of the system, perform other driving functions, and cope with (e.g., resolve) emergency situations. At autonomous driving level 3, the SAE classification standard may correspond to "conditional automation," in which the system drives the vehicle (e.g., performs driving functions such as steering, acceleration, and/or braking) under limited conditions but transfer driving control to the driver when the required conditions are not met, and the driver is expected to determine an operation state and/or timing of the system, and take over control in emergency situations but do not otherwise operate the vehicle (e.g., steer, accelerate, and/or brake). At autonomous driving level 4, the SAE classification standard may correspond to "high automation," in which the system performs all driving functions, and the driver is expected to take control of the vehicle only in emergency situations. At autonomous driving level 5, the SAE classification standard may correspond to "full automation," in which the system performs full driving functions without any aid from the driver including in emergency situations, and the driver is not expected to perform any driving functions other than determining the operating state of the system. Although the present disclosure may apply the SAE classification standard for autonomous driving classification, other classification methods and/or algorithms may be used in one or more configurations described herein.

One or more features associated with autonomous driving control may be activated based on configured autonomous driving control setting(s) (e.g., based on at least one of: an autonomous driving classification, a selection of an autonomous driving level for a vehicle, etc.). Based on one or more features (e.g., features of lane change control) described herein, an operation of the vehicle may be controlled. The vehicle control may include various operational controls associated with the vehicle (e.g., autonomous driving control, sensor control, braking control, braking time control, acceleration control, acceleration change rate control, alarm timing control, forward collision warning time control, etc.).

One or more auxiliary devices (e.g., engine brake, exhaust brake, hydraulic retarder, electric retarder, regenerative brake, etc.) may also be controlled, for example, based on one or more features (e.g., features of lane change control) described herein.

One or more communication devices (e.g., a modem, a network adapter, a radio transceiver, an antenna, etc., that is capable of communicating via one or more wired or wireless communication protocols, such as Ethernet, Wi-Fi, near-field communication (NFC), Bluetooth, Long-Term Evolution (LTE), 5G New Radio (NR), vehicle-to-everything (V2X), etc.) may also be controlled, for example, based on one or more features (e.g., features of lane change control) described herein.

Minimum risk maneuver (MRM) operation(s) may also be controlled, for example, based on one or more features (e.g., features of lane change control) described herein. A minimal risk maneuvering operation (e.g., a minimal risk maneuver, a minimum risk maneuver) may be a maneuvering operation of a vehicle to minimize (e.g., reduce) a risk of collision with surrounding vehicles in order to reach a lowered (e.g., minimum) risk state. A minimal risk maneuver may be an operation that may be activated during autonomous driving of the vehicle when a driver is unable to respond to a request to intervene. During the minimal risk maneuver, one or more processors of the vehicle may control a driving operation of the vehicle for a set period of time.

Biased driving operation(s) may also be controlled, for example, based on one or more features (e.g., features of lane change control) described herein. A driving control apparatus may perform a biased driving control. To perform a biased driving, the driving control apparatus may control the vehicle to drive in a lane by maintaining a lateral distance between the position of the center of the vehicle and the center of the lane. For example, the driving control apparatus may control the vehicle to stay in the lane but not in the center of the lane. The driving control apparatus may identify or determine a biased target lateral distance for biased driving control. For example, a biased target lateral distance may comprise an intentionally adjusted lateral distance that a vehicle may aim to maintain from a reference point, such as the center of a lane or another vehicle, during maneuvers such as lane changes. This adjustment may be made to improve the vehicle's stability, safety, and/or performance under varying driving conditions, etc. For example, during a lane change, the driving control system may bias the lateral distance to keep a safer gap from adjacent vehicles, considering factors such as the vehicle's speed, road conditions, and/or the presence of obstacles, etc.

One or more sensors (e.g., IMU sensors, camera, LIDAR, RADAR, blind spot monitoring sensor, line departure warning sensor, parking sensor, light sensor, rain sensor, traction control sensor, anti-lock braking system sensor, tire pressure monitoring sensor, seatbelt sensor, airbag sensor, fuel sensor, emission sensor, throttle position sensor, inverter, converter, motor controller, power distribution unit, high-voltage wiring and connectors, auxiliary power modules, charging interface, etc.) may also be controlled, for example, based on one or more features (e.g., features of lane change control) described herein. An operation control for autonomous driving of the vehicle may include various driving control of the vehicle by the vehicle control device (e.g., acceleration, deceleration, steering control, gear shifting control, braking system control, traction control, stability control, cruise control, lane keeping assist control, collision avoidance system control, emergency brake assistance control, traffic sign recognition control, adaptive headlight control, etc.).

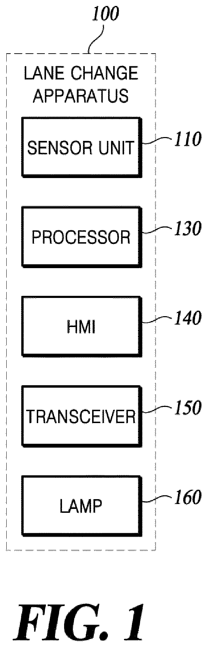

FIG. 1 shows an example of a lane change apparatus according to an example of the present disclosure.

Referring to FIG. 1, the lane change apparatus 100 (hereinafter referred to as "apparatus") according to an example of the present disclosure may control autonomous driving and a lane change of a subject vehicle 10.

When an event occurs, the apparatus 100 may perform control for a lane change of the subject vehicle 10. The subject vehicle 10 and its user may be protected from the risk of accidents by controlling the lane change through the apparatus 100.

Hereinafter, various examples of events will be described. The event according to an example of the present disclosure is not limited to the following examples.

For example, the event may refer to any case where a vehicle may not perform autonomous driving due to internal and/or external causes (e.g., sensor failure, actuator malfunction, or communication loss, etc.) of the vehicle.

For example, the event may refer to any case in which an issue arises from at least one of the driving functions of a vehicle due to internal and/or external causes of the vehicle, or in which the vehicle is unable to be driven (e.g., electrical system failure, control logic fault, or energy depletion, etc.).

For example, the event may refer to a malfunction occurring in at least one of various functions of a vehicle. For example, the event may refer to a malfunction occurring in at least one of a steering function, an acceleration function, a deceleration function, a braking function, a stopping function, a lane change function, a lane and line detection function, a lateral control function, an object (or an obstacle) recognition and distance detection function, a current position measurement function, a powertrain control function, a safety zone detection function, an engine on/off function, a power on/off function, a vehicle lock/unlock function, a communication function, or an autonomous driving function (e.g., disengagement due to software timeout or persistent sensor blockage, etc.). The listed items above are merely examples for understanding, and the case where a malfunction occurs to a vehicle is not limited to the above examples.

For example, the event may refer to various causes in which the surrounding environment of a vehicle changes while driving. For example, the event may refer to a case where object recognition using a sensor is impossible or the sensor is not able to operate normally due to weather conditions (e.g., heavy rain, heavy snow, thick fog, backlight, or extreme temperature, etc.), a case where the road is damaged or not in normal condition due to a sinkhole or natural disaster (e.g., landslide, earthquake, or flooding, etc.), a case where a major accident occurs or an obstacle exists on a road, making it impossible to drive along a normal route, a case where the road is slippery to the extent that driving and/or braking is difficult (e.g., icy road, rainy road, oily surface, or heavy rain accumulation, etc.), and a case where the number of lanes available for driving is reduced or a detour is required due to road construction.

For example, the event may refer to a case where an operation design domain (ODD) is not satisfied. The ODD refers to the operation conditions specifically designed (or set) for the autonomous driving system to operate. The ODD may be a concept that includes various conditions required to perform autonomous driving functions, such as the surrounding environment during driving, weather conditions, time zone, traffic conditions, road characteristics, vehicle speed, and whether the vehicle functions are normal (e.g., highway-only operation, limited weather range, or geofenced urban areas, etc.).

For example, the event may refer to a case where a minimal risk maneuver (MRM) is needed. The MRM may refer to a vehicle maneuver method to minimize the occurrence of an accident, such as performing a lane change or stopping a vehicle. A case where the MRM is needed may refer to any case where normal autonomous driving may not be performed. A case where the MRM is needed may refer to a case where an issue occurs in one or more of the functions for performing autonomous driving. A case where the MRM is needed may refer to a case where autonomous driving is performed and a vehicle suddenly becomes outside the ODD (e.g., entering a tunnel, exiting a mapped area, or encountering construction zones, etc.). The definition of the MRM and the cases where the MRM is needed are not limited to the examples described above.

The apparatus 100 according to an example of the present disclosure may be mounted on the subject vehicle 10. The apparatus 100 according to an example of the present disclosure may be configured to control the autonomous driving of the subject vehicle 10.

When an event occurs, the apparatus 100 according to an example of the present disclosure may control the subject vehicle 10 and perform a lane change. When an event occurs, the apparatus 100 according to an example of the present disclosure may control the subject vehicle 10 to stop (e.g., on the shoulder, in the current lane, or in a designated safety zone, etc.).

The apparatus 100 according to an example of the present disclosure may sense vehicle state information and the surrounding environment information of the subject vehicle 10.

The apparatus 100 according to an example of the present disclosure may generate a lane change control signal. The subject vehicle 10 may perform a lane change according to the lane change control signal.

The lane change control signal according to an example of the present disclosure may include a first control signal and a second control signal. The apparatus 100 according to an example of the present disclosure may variably generate the lane change control signal according to a present vehicle-to-vehicle distance and a required vehicle-to-vehicle distance (e.g., to ensure safe merging based on real-time spacing conditions between the subject vehicle 10 and nearby vehicles, etc.). The subject vehicle 10 performs a lane change based on the lane change control signal (e.g., by executing steering and speed adjustments encoded in the signal).

The apparatus 100 according to an example of the present disclosure may variably set the required vehicle-to-vehicle distance based on the vehicle state information, surrounding environment information, and the occurrence of an event of the subject vehicle 10 (e.g., adjusting thresholds during adverse weather, low-speed conditions, or emergency maneuvers, etc.).

The apparatus 100 according to an example of the present disclosure may adjust the lateral acceleration of the subject vehicle 10 and the rate of change in the lateral acceleration with respect to time differently when changing lanes. The lateral acceleration of the subject vehicle 10 and the rate of change in the lateral acceleration with respect to time may be adjusted by considering the speed of another vehicle 50 (e.g., using dynamic adaptation to prevent abrupt maneuvers and ensure smoother merging near faster or slower vehicles, etc.).

The apparatus 100 according to an example of the present disclosure may set a stop target point on the shoulder and an expected moving path to the stop target point. The stop target point may be a target minimal risk condition zone (TMZ) (e.g., road shoulder, safety pocket, or emergency bay, etc.).

The apparatus 100 according to an example of the present disclosure may control the subject vehicle 10 to perform any one of a straight stop, an in-lane stop, or a shoulder stop.

When an event occurs, the apparatus 100 according to an example of the present disclosure may adjust the size of the required vehicle-to-vehicle distance so that a lane change may be performed under more relaxed conditions than when the event does not occur. Accordingly, the subject vehicle 10 may perform a lane change under relaxed conditions, enabling improved risk management for various situations (e.g., a breakdown of the subject vehicle 10, sensor failure, driver inattention, or unexpected road narrowing, etc.) that may occur during driving of the subject vehicle 10.

The apparatus 100 according to an example of the present disclosure may include a sensor unit 110, a processor 130, a human-machine interface (HMI) 140, a transceiver 150, and a lamp 160. The apparatus 100 according to an example of the present disclosure may also include other components not described in the drawings (e.g., storage devices, controllers, or actuators, etc.).

According to an example of the present disclosure, the sensor unit 110 includes at least one sensor. The sensor unit 110 may sense the vehicle state information of the subject vehicle 10 using the at least one sensor. The vehicle state information may refer to parameters such as a vehicle speed, acceleration, steering angle, brake pad temperature, brake pad wear, engine RPM, remaining fuel level, coolant temperature, tire pressure, engine oil condition, battery voltage, vehicle interior/exterior temperature, vehicle current position, or transmission temperature (e.g., for assessing drivability, component health, or internal fault conditions, etc.). The vehicle state information according to an example of the present disclosure is not limited to the examples described above. The processor 130 may determine whether an event occurs based on the vehicle state information (e.g., detecting anomalies, threshold violations, or abnormal patterns in sensor readings, etc.).

The sensor unit 110 may sense the surrounding environment information of the subject vehicle 10 using the at least one sensor. The processor 130 may determine whether an event occurs based on the surrounding environment information of the subject vehicle 10. The surrounding environment information may refer to weather conditions (e.g., heavy rain, heavy snow, thick fog, backlight, or ambient temperature, etc.), road conditions (e.g., sinkholes, cracks in the road, black ice, potholes, rain, or standing water, etc.), presence of traffic accidents, objects around a vehicle (e.g., speed of objects, direction of movement of objects, or distance to objects such as other vehicles, pedestrians, or static obstacles, etc.), or presence of traffic congestion (e.g., detected by low relative speeds, clustering of nearby vehicles, or external data sources). The surrounding environment information according to an example of the present disclosure is not limited to the examples described above.

The sensor unit 110 may acquire information on objects around a vehicle (e.g., other vehicles, bicycles, people, pedestrians, objects, curbs, guard rails, lanes, lines, obstacles, lane markings, and the like) based on sensing data acquired using the at least one sensor. The information on objects around the vehicle may include at least one of a position of the object, a size of the object, a shape of the object, a distance from the object, and a relative speed to the object e.g., for collision prediction, path planning, or behavioral modeling, etc.). The sensor unit 110 may include at least one of a camera, a light detection and ranging (LIDAR), a radio detection and ranging (RADAR), an ultrasonic sensor, an infrared sensor, or a position measuring sensor (e.g., for fusion-based perception and environmental mapping). The listed sensors are merely examples for understanding, and the sensor of an example of the present disclosure is not limited thereto. The camera may capture the surroundings of the subject vehicle 10 and generate data on objects located in front, rear, or side of the subject vehicle 10 (e.g., using monocular or stereo vision). The LIDAR may generate data on objects located in front, rear, or side of the subject vehicle 10 using light (or laser), for example, in the form of 3D point clouds. The RADAR may generate data on objects located in front, rear, or side of the subject vehicle 10 using electromagnetic waves (or radio waves), for example, capable of penetrating poor weather conditions. The ultrasonic sensor may generate data on objects located in front, rear, or side of the subject vehicle 10 using ultrasonic waves (e.g., for close-range detection during parking or low-speed maneuvers, etc.). The infrared sensor may generate data on objects located in front, rear, or side of the subject vehicle 10 using infrared light (e.g., for thermal imaging or night vision capabilities, etc.).

The sensor unit 110 may measure the current position of the subject vehicle 10 using the at least one sensor. For example, the current position of the subject vehicle 10 may be measured using a position measurement sensor. The position measurement sensor may include at least one of a global positioning system (GPS) sensor, a differential global positioning system (DGPS) sensor, or a global navigation satellite system (GNSS) sensor (e.g., Galileo, GLONASS, or BeiDou, etc.). The position measurement sensor may generate position data of the subject vehicle 10 based on a signal generated by at least one of the GPS sensor, the DGPS sensor, or the GNSS sensor (e.g., to support localization, navigation, and high-definition map matching tasks).

The sensor unit 110 may acquire weather information on a surrounding environment using the at least one sensor. For example, the processor 130 may determine whether it is raining based on a signal from a rain sensor (e.g., optical rain sensor, capacitive rain detector, or windshield vibration analysis, etc.).

According to an example of the present disclosure, the transceiver 150 may communicate with an external device of the subject vehicle 100 under the control of the processor 130. The transceiver 150 may perform communication by using a wired communication protocol or a wireless communication protocol (e.g., Ethernet, CAN, LIN, Bluetooth, Wi-Fi, cellular, or V2X standards such as C-V2X or DSRC, etc.).

According to an example of the present disclosure, the HMI 140 refers to an interface configured so that a user (or a passenger) may interact with the subject vehicle 10 (e.g., to receive notifications, provide commands, or monitor system status during autonomous or manual driving modes). The type and function of the HMI 140 according to an example of the present disclosure are not limited to the examples below.

For example, the HMI 140 may include a display, a speaker, a haptic device (e.g., a seat with vibration feedback, a haptic-enabled steering wheel, a button, or a touch screen, etc.), and interior cabin lighting (e.g., used for color-coded status indicators or user alerts).

The HMI 140 may convey various pieces of information to a user using visual, auditory, and tactile signals. For example, the HMI 140 may perform functions such as vehicle speed, autonomous driving start (or end) guidance, control switch guidance, real-time driving path guidance, surrounding traffic information guidance, warning sound output, weather guidance, or lane change start (or end) guidance (e.g., via visual prompts, voice announcements, or seat vibrations, etc.).

A user may input a command to control the subject vehicle 10 using the HMI 140. For example, the user may input a command to control the subject vehicle 10 using the buttons, touch screen, and voice recognition function of the HMI 140 (e.g., by tapping a virtual control, speaking a voice command such as "change lane," or pressing a physical button, etc.). For example, the user may request a lane change of the subject vehicle 10 using the HMI 140 when manual intervention is permitted or during shared control scenarios.

According to an example of the present disclosure, the lamp 160 may include a turn signal and an emergency flasher. The processor 130 may control the turn signal when changing lanes to notify other vehicles around the subject vehicle 10 that the lane change of the subject vehicle 10 has begun (e.g., activating the appropriate blinker during lateral movement initiation). When a situation requiring the MRM occurs, the processor 130 may control the emergency flasher to notify other vehicles therearound that there is an emergency situation (e.g., due to system failure, sensor abnormality, or driver non-responsiveness, etc.).

According to an example of the present disclosure, the processor 130 may control each component of the subject vehicle 10. For example, the processor 130 may control each component of the subject vehicle 10 so as to perform a steering function, an acceleration function, a deceleration function, a braking function, a lane change function, a line detection function, a lateral control function, an object (obstacle) recognition and distance detection function, a powertrain control function, and a safety zone detection function (e.g., through real-time signal processing, sensor fusion, and decision-making algorithms, etc.).

The processor 130 may determine whether a malfunction occurs to each component based on the signals received from each component of the subject vehicle 10. The processor 130 may determine whether an event occurs based on a malfunction of each component of the processor 130 (e.g., based on diagnostic fault codes, communication timeouts, or abnormal sensor readings, etc.).

The processor may control the autonomous driving of the subject vehicle 10. The processor 130 may determine whether there is a malfunction in a function used for the autonomous driving. The function used for the autonomous driving may include, for example, at least one of a line detection function, a lane change function, a lateral control function, a deceleration (or brake control) function, a powertrain control function, a safety zone detection function, or an object (obstacle) recognition and distance detection function (e.g., components that directly impact the ability to maintain lane position, avoid collisions, or execute fallback maneuvers, etc.).

The processor 130 may determine whether autonomous driving is possible based on whether there is a malfunction in any of the functions used to perform autonomous driving reliably and safely.

When normal autonomous driving is impossible or practically impossible, the processor 130 may determine that the MRM is to be performed to minimize the risk of an accident (e.g., by triggering fallback procedures such as pulling over, stopping in-lane, or switching control modes).

When normal autonomous driving is impossible, the processor 130 may determine that an event has occurred (e.g., system-critical failure, sensor degradation, or deviation from the operational design domain, etc.).

The processor 130 may determine that the MRM is to be performed when an abnormal signal for a user (driver) is sensed or an emergency stop is requested, regardless of whether the autonomous driving system is normal (i.e., operating without any detected hardware or software malfunctions, within its defined operational design domain, and with all required sensors and actuators functioning correctly). The abnormal signal for the user may include a case where there is an abnormality in the bio-signal of a user (e.g., heart rate irregularity, detected drowsiness, or medical distress) or a case where the user does not respond to a handover request e.g., no interaction with HMI after multiple prompts). The emergency stop may be requested by a user or a third party (e.g., a law enforcement officer or police officer, a passenger, or remote operator, etc.).

The method for determining, by the processor 130, whether an event occurs is not limited to the examples described above and may also include machine-learned or rule-based anomaly detection techniques.

When an event occurs, the processor may perform the MRM for the subject vehicle 10. When an event occurs, the processor 130 may be controlled so that the subject vehicle 10 performs a lane change. When an event occurs, the processor 130 may be controlled so that the subject vehicle 10 stops (e.g., using a straight stop, in-lane stop, or shoulder stop depending on feasibility and safety conditions).

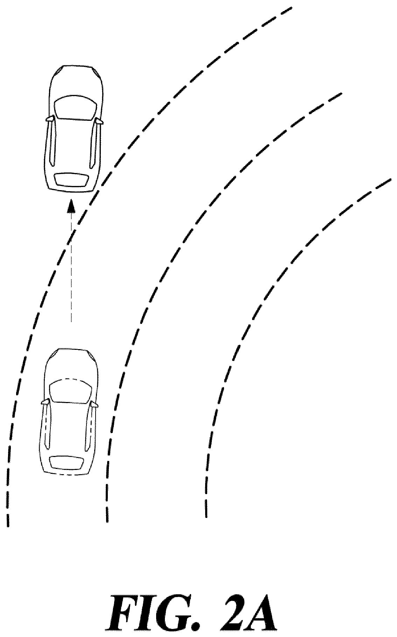

FIG. 2A shows an example of a straight stop according to an example of the present disclosure (e.g., where the subject vehicle 10 decelerates and stops in its current trajectory without performing lateral movement due to unavailable lane control or sensor limitations, etc.).

Referring to FIG. 2A, the straight stop is a stopping method by performing longitudinal control. When the straight stop is performed, lateral control is not applied. In other words, the control to maintain the current lane is not performed when the straight stop is performed. The straight stop may be performed when lane detection is impossible or lateral control is impossible due to a defect in an actuator for lateral control (e.g., steering motor failure, lateral sensor fault, or communication loss to the lateral controller, etc.). The subject vehicle 10 according to an example of the present disclosure may perform the straight stop under the control of the processor 130 (e.g., when lateral control is unavailable due to actuator malfunction, sensor failure, or degraded road conditions, etc.).

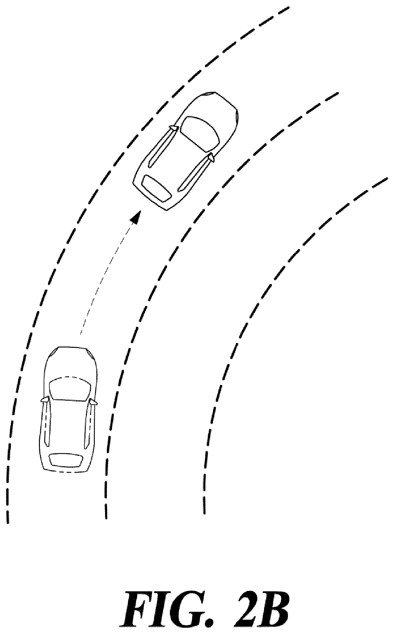

FIG. 2B shows an example of an in-lane stop according to an example of the present disclosure (e.g., where the vehicle comes to a controlled stop while maintaining its position within the current lane boundaries, etc.).

Referring to FIG. 2B, the in-lane stop is a stopping method in which the vehicle remains within the current lane until a vehicle stops. When the in-lane stop is performed, both longitudinal control and lateral control for a vehicle may be performed. The subject vehicle 10 according to an example of the present disclosure may perform the in-lane stop under the control of the processor 130 (e.g., when lane markings are detectable, and a full shoulder stop is not feasible due to surrounding conditions).

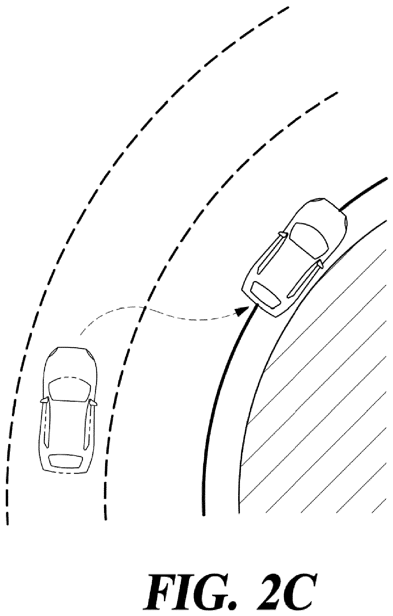

FIG. 2C shows an example of a half-shoulder stop according to an example of the present disclosure (e.g., where part of the vehicle remains in the driving lane due to limited shoulder width or partial obstruction, etc.).

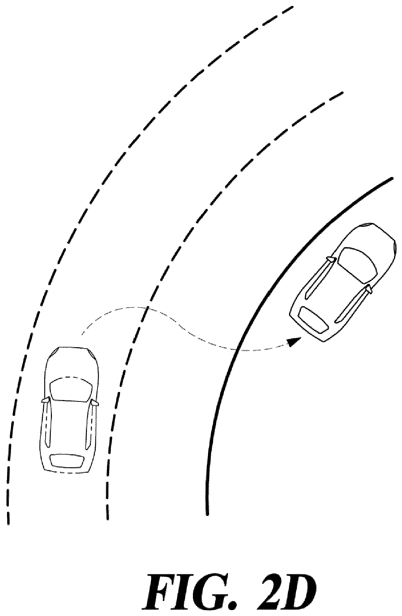

FIG. 2D shows an example of a full-shoulder stop according to an example of the present disclosure (e.g., where the entire vehicle is safely moved out of the driving lane to complete a minimal risk maneuver, etc.).

The shoulder stop is a stopping method in which the vehicle moves to and stops on a shoulder. The shoulder stop may include the types such as a half-shoulder stop and a full-shoulder stop (e.g., depending on available space, lane boundary position, or urgency level, etc.).

Referring to FIG. 2C, the half-shoulder stop is a method of stopping a portion of a vehicle on the shoulder. In this example, the remaining portion of the vehicle may be located in the lane (e.g., when the shoulder width is insufficient for the entire vehicle body, or when an obstacle partially blocks the shoulder, etc.). When the half-shoulder stop is performed, longitudinal control and lateral control of the vehicle may be performed. The subject vehicle 10 according to an example of the present disclosure may perform the half-shoulder stop under the control of the processor 130.

Referring to FIG. 2D, the full-shoulder stop is a method of stopping the entire vehicle on the shoulder such that none of the vehicle's body remains in the driving lane. When the full-shoulder stop is performed, longitudinal control and lateral control for the vehicle may be performed. The subject vehicle 10 according to an example of the present disclosure may perform the full-shoulder stop under the control of the processor 130.

For the MRM, the processor 130 may be controlled so that the subject vehicle 10 performs any one of the straight stop, the in-lane stop, the half-shoulder stop and the full-shoulder stop (e.g., based on sensor data, available road structure, or system fallback level, etc.).

When an event occurs, the processor 130 may be controlled so that the subject vehicle 10 performs any one of the straight stop, the in-lane stop, the half-shoulder stop, or the full-shoulder stop (e.g., depending on road conditions, surrounding traffic, or the availability of a safe stopping zone, etc.).

FIG. 3 shows an example of a traffic lane change according to an example of the present disclosure (e.g., from one driving lane to an adjacent driving lane under controlled or emergency conditions).

FIG. 4 shows an example of a shoulder change according to an example of the present disclosure (e.g., transitioning from a traffic lane to a road shoulder as part of a minimal risk maneuver).

Referring to FIGS. 3 and 4, the subject vehicle 10 may perform a lane change according to a lane change control signal, for example, generated based on surrounding environment information and vehicle state information.

The lane change according to an example of the present disclosure may include a traffic lane change (lane-to-lane change) and a shoulder change (lane-to-shoulder change) (e.g., when avoiding an obstacle, responding to system failure, or performing a minimal risk maneuver, etc.).

The traffic lane change means that a vehicle moves from a current lane to an adjacent lane. For example, as shown in FIG. 3, the subject vehicle 10 may perform a traffic lane change from the current lane of lane 3 (FIG. 3) to the adjacent lane (lane 4, FIG. 3) to maintain route continuity, avoid slower traffic, or comply with navigation guidance, etc.

The shoulder change means that a vehicle moves from the current lane to the shoulder. For example, as shown in FIG. 4, the subject vehicle 10 may perform a shoulder change from the current lane of lane 4 (FIG. 4) to the shoulder (FIG. 4) in response to an emergency event, sensor failure, or when exiting the operational design domain (ODD), etc.

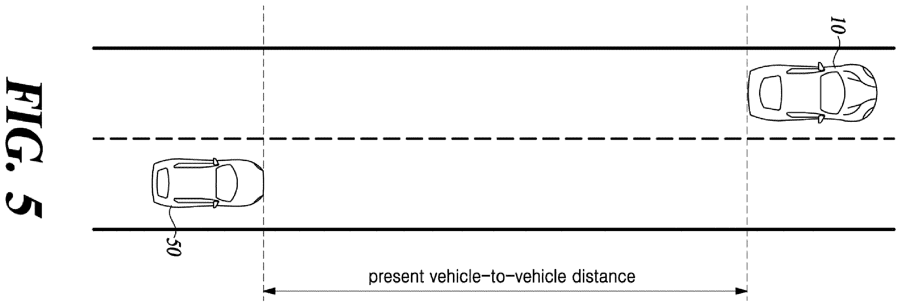

FIG. 5 shows an example of a present vehicle-to-vehicle distance according to an example of the present disclosure (e.g., as measured by onboard sensors to evaluate whether a lane change is feasible or safe).

Referring to FIG. 5, the present vehicle-to-vehicle distance means a distance between the other vehicle 50 and the subject vehicle 10 on a change target lane (e.g., the adjacent lane or shoulder lane into which the subject vehicle intends to merge).

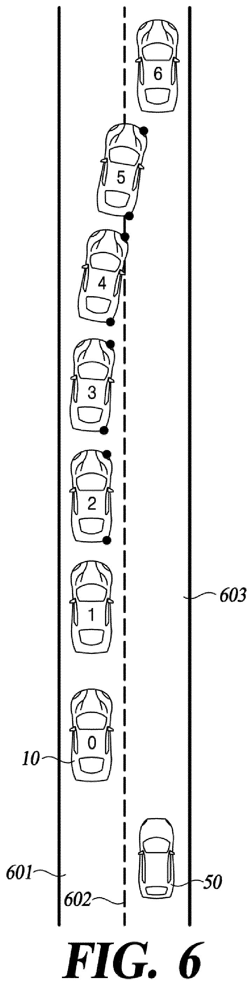

FIG. 6 shows an example of each process of a lane change according to an example of the present disclosure (e.g., from event detection to lane change completion).

Referring to FIG. 6, the subject vehicle 10 may perform each process for a lane change sequentially or in parallel, for example, depending on system conditions and situational urgency (e.g., normal driving or minimal risk maneuver). Each process will be described in further detail below.

Process 0 will be described.

This is the case where no event occurs. In other words, no MRM is required and there is no motivation to change lanes. The subject vehicle 10 drives while maintaining an initial lane 601 (FIG. 6) under normal operational conditions (e.g., system health is normal, no obstacles are detected, and ODD is satisfied, etc.).

Process 1 will be described.

This is the case where an event occurs. The processor 130 may determine whether a lane change (traffic lane change or shoulder change) is possible. When the required vehicle-to-vehicle distance is greater than the present vehicle-to-vehicle distance, the processor 130 may determine that a lane change is possible. The processor 130 may adjust the size of the required vehicle-to-vehicle distance so that a lane change may be performed under more relaxed conditions than when an event does not occur (e.g., by reducing reaction distance, safety distance, or braking distance based on urgency, etc.).

In process 1, the processor 130 may determine whether either a traffic lane change or a shoulder change is to be performed. When the shoulder change is determined to be performed, the processor 130 may set a stop target point for the shoulder change and an expected moving path to the stop target point. When the setting of the stop target point or the setting of the expected moving path fails, the processor 130 may control the subject vehicle 10 to perform a straight stop or an in-lane stop (e.g., due to limited shoulder width, GPS uncertainty, or obstructions ahead, etc.).

Process 2 will be described.

The subject vehicle 10 may notify a user (driver) that a lane change has begun. The subject vehicle 10 may use lamps (e.g., emergency flashers or turn signals) to notify the passengers of the other vehicle 50 that the subject vehicle 10 has changed lanes or is about to change lanes.

Process 3 will be described.

This is the state where the lateral movement of the subject vehicle 10 for a lane change has begun, but the subject vehicle 10 has not moved away from the initial lane 601. Herein, the lateral movement is performed after the emergency flashers and/or turn signals have been operated for a preset time (e.g., 1-2 seconds depending on system calibration, etc.).

Process 4 will be described.

This is the state where at least one of the tires of the subject vehicle 10 is in contact with a lane 602 between the initial lane 601 and a change target lane 603.

Process 5 will be described.

This is the state where at least one of the front tires of the subject vehicle 10 has entered the change target lane 603 more than halfway. Since the subject vehicle 10 has moved sufficiently in the lateral direction, the change target lane 603 may be considered as the current lane. In the case of process 5, even when a new vehicle (not shown) approaches from the rear of the subject vehicle 10, the subject vehicle 10 may complete the lane change due to established precedence and safe margin.

Process 6 will be described.

This is the state where the lane change is complete and all tires of the subject vehicle 10 have completely entered the change target lane 603 (e.g., confirmed through lateral position estimation, tire sensors, or map-matching algorithms, etc.).

Process 7 (not shown) will be described below.

Depending on the type of lane change by the preceding processes, process 7 may proceed differently (e.g., initiate a stop on the shoulder or prepare for another maneuver, etc.).

When the lane change by the preceding processes is a traffic lane change, the subject vehicle 10 prepares for an additional lane change. For example, the subject vehicle 10 may perform process 1 again, for example, to transition across multiple lanes or reach a designated stop location.

When the lane change by the preceding processes is a shoulder change, the subject vehicle 10 may perform a shoulder stop (e.g., half-shoulder or full-shoulder stop based on available space and stop target zone characteristics, etc.).

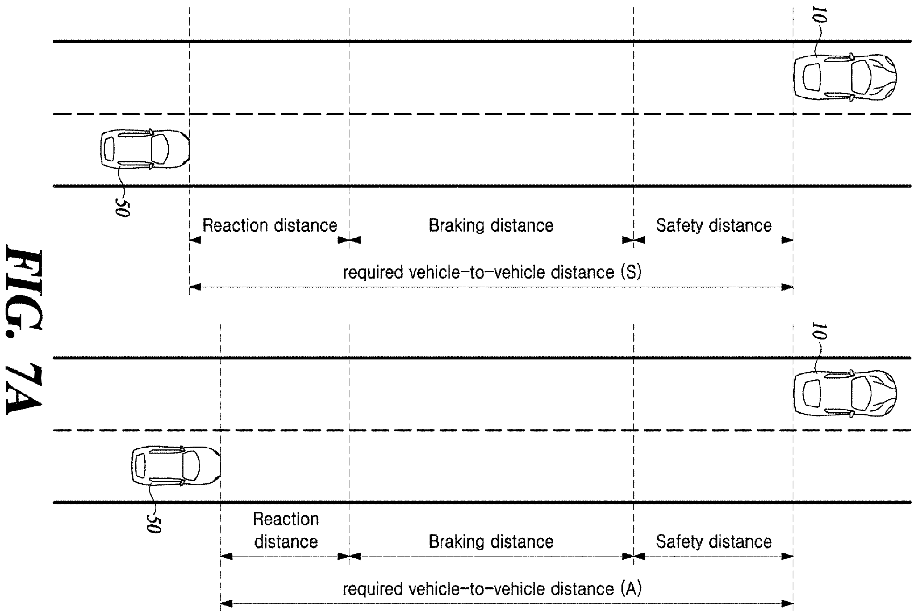

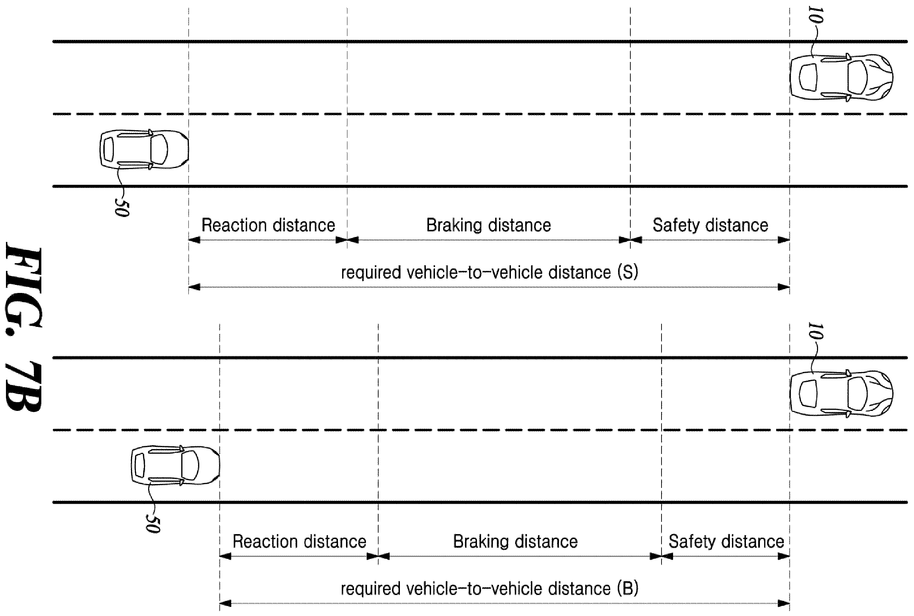

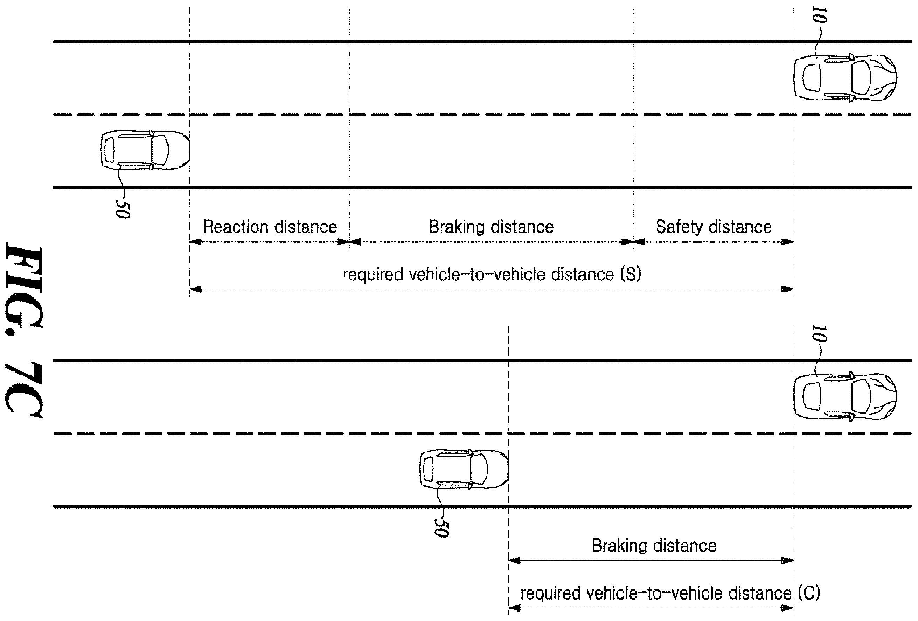

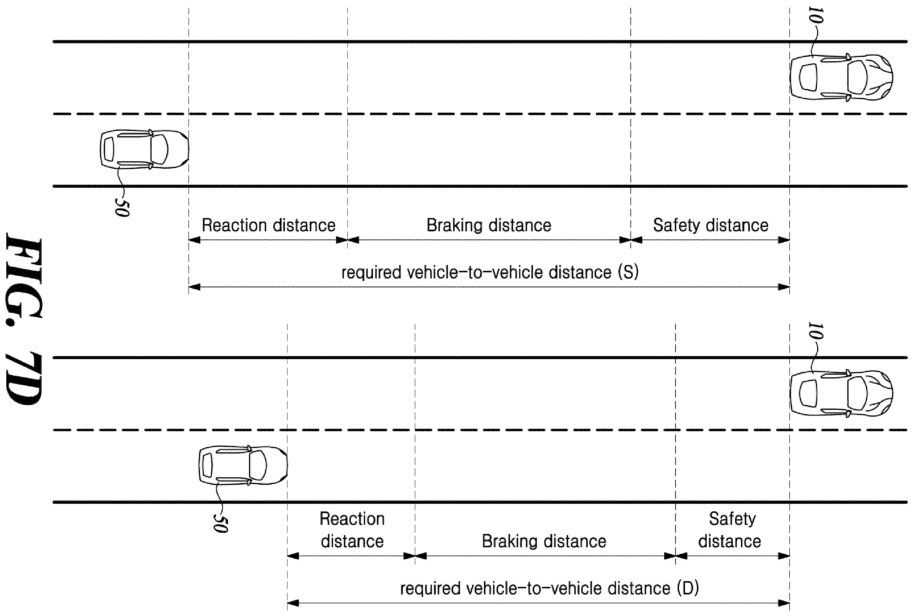

FIGS. 7A, 7B, 7C, and 7D show an example of a required vehicle-to-vehicle distance according to an example of the present disclosure.

Referring to FIGS. 7A to 7D, the required vehicle-to-vehicle distance means a minimum distance between the other vehicle 50 and the subject vehicle 10 required for a lane change of the subject vehicle 10. The processor 130 may set the size of the required vehicle-to-vehicle distance differently, for example, based on whether an event has occurred (e.g., system failure, sensor degradation, or operational design domain violation, etc.).

In each of FIGS. 7A to 7D, the required vehicle-to-vehicle distance (S) and the required vehicle-to-vehicle distance (A, B, C, D) when an event occurs are illustrated for comparison. The sizes of the required vehicle-to-vehicle distances (S) in each of FIGS. 7A, 7B, 7C, and 7D are the same and may represent standard safe distances under normal driving conditions.

The required vehicle-to-vehicle distance (S) may be the required vehicle-to-vehicle distance when an event does not occur, for example, when the MRM is to be performed.

When an event occurs, the processor 130 may set the required vehicle-to-vehicle distance smaller than when an event does not occur. For example, in the case of FIG. 7A, S > A, in the case of FIG. 7B, S > B, in the case of FIG. 7C, S > C, and in the case of FIG. 7D, S > D, for example, to reflect more aggressive or urgent lane change behavior needed during emergency handling.

The processor 130 may set a value summing up a reaction distance, a braking distance, and a safety distance as the required vehicle-to-vehicle distance (e.g., S = d_reaction + d_braking + d_safety, etc.).

The processor 130 calculating each of the reaction distance, the braking distance, and the safety distance using each of Equations 1 to 3 described below is merely an example. In order to calculate each of the reaction distance, the braking distance, and the safety distance, the processor 130 may also use a completely different equation rather than each of Equations 1 to 3 (e.g., learned distance thresholds based on real-time data, rule-based functions, or conservative static values, etc.).

The reaction distance may mean a distance reduced between the subject vehicle 10 and the other vehicle 50 from a time the subject vehicle 10 begins to move in a lateral direction until the other vehicle 50 performs braking. In other words, the reaction distance may mean a change amount in a vehicle-to-vehicle distance until the other vehicle 50 reacts to a lane change of the subject vehicle 10 (e.g., through driver reaction time or delay in system response, etc.).

When a lane change of the subject vehicle 10 is performed in a state where no event has occurred, for example, a state where the MRM is not to be performed, the processor 130 may calculate the reaction distance using Equation 1.

[Equation 1]

$$d_{reaction} = (v_{10} - v_{50}) \cdot t_{50}$$

In Equation 1, $d_{reaction}$ represents the reaction distance, $v_{10}$ represents the speed of the subject vehicle 10, $v_{50}$ represents the speed of the other vehicle 50, and $t_{50}$ represents the time taken from the moment the subject vehicle 10 begins to move in a lateral direction until the other vehicle 50 performs braking (e.g., due to perception delay, system latency, or driver reaction time, etc.).

According to an example of the present disclosure, when the actual speed of the other vehicle 50 is detected by the sensor unit 110 and the processor 130, $v_{50}$ may apply the actual speed of the detected other vehicle 50 (e.g., obtained via radar, LIDAR, or V2V communication, etc.).

According to an example, $v_{50}$ may be a value obtained by adding a preset value (e.g., *+30 km/h)* to the speed limit of a road, for example, to account for aggressive following vehicles or worst-case assumptions.

When an event occurs, for example, in a situation where the MRM is to be performed, the processor 130 may apply an equation other than Equation 1 so that a reaction distance smaller than the reaction distance by Equation 1 is output (e.g., by using a shorter assumed driver/system reaction time, suppressing the delay margin, or simplifying assumptions in emergency scenarios, etc.). For example, the reaction distance of the required vehicle-to-vehicle distance (A) of FIG. 7A is smaller than the reaction distance of the required vehicle-to-vehicle distance (S) calculated under normal driving conditions.

The braking distance may mean a distance reduced between the subject vehicle 10 and the other vehicle 50 while the other vehicle 50 is performing braking (e.g., in response to the subject vehicle merging in front of it).

When a lane change of the subject vehicle 10 is performed in a state where no event has occurred, for example, a state where the MRM is not to be performed, the processor 130 may calculate the braking distance using Equation 2.

[Equation 2]

$$d_{braking} = \frac{(v_{10} - v_{50})^2}{2 \cdot dec_{50}}$$

In Equation 2, $d_{braking}$ represents the braking distance, $v_{10}$ represents the speed of the subject vehicle 10, $v_{50}$ represents the speed of the other vehicle 50, and $dec_{50}$ represents the negative acceleration of the other vehicle 50.

$dec_{50}$ may be set to a different size depending on whether an event occurs. For example, when no event occurs, $dec_{50}$ may be -3$m/s^2$. When an event occurs, $dec_{50}$ may be -4$m/s^2$, for example, to reflect a more abrupt but still safe deceleration in emergency response.

According to an example of the present disclosure, when the actual speed of the other vehicle 50 is detected by the sensor unit 110 and the processor 130, $v_{50}$ may apply the actual speed of the detected other vehicle 50.

According to an example, $v_{50}$ may be a value obtained by adding a preset value (e.g., *+30 km/h)* to the speed limit of a road.

When an event occurs, for example, in a situation where the MRM is to be performed, the processor 130 may apply an equation other than Equation 2 so that a braking distance smaller than the braking distance by Equation 2 is output.

The safety distance may mean a distance between the subject vehicle 10 and the other vehicle 50 at a time when the braking performance of the other vehicle 50 is completed and both vehicles are traveling at similar speeds.

When a lane change of the subject vehicle 10 is performed in a state where no event has occurred, for example, a state where the MRM is not to be performed, the processor 130 may calculate the safety distance using Equation 3.

[Equation 3]

$$d_{safety} = v_{10} \cdot t_{gap}$$

In Equation 3, $d_{safety}$ represents the safety distance, $v_{10}$ represents the speed of the subject vehicle 10. $t_{gap}$ is the time interval assumed when the braking (deceleration) of the other vehicle 50 is completed and the speeds of the other vehicle 50 and the subject vehicle 10 are the same. In other words, $t_{gap}$ means the time taken (e.g., 1-2 seconds depending on traffic regulation or system configuration, etc.) for the other vehicle 50 to move the same distance as the safety distance when both the other vehicle 50 and the subject vehicle 10 are travelling at the same speed.

When an event occurs, for example, in a situation where the MRM is to be performed, the processor 130 may apply an equation other than Equation 3 so that a safety distance smaller than the safety distance by Equation 3 is output (e.g., by reducing the assumed time gap, eliminating redundancy in buffer margins, or prioritizing rapid maneuver execution under emergency constraints, etc.). For example, the safety distance of the required vehicle-to-vehicle distance (B) of FIG. 7B is smaller than the safety distance of the required vehicle-to-vehicle distance (S) under non-event conditions.

When an event occurs, the processor 130 may set at least one of the reaction distance, braking distance, or safety distance to be smaller than when the event does not occur. This is to perform a lane change for the subject vehicle 10 under more relaxed conditions when an event occurs (e.g., reduced following gap, minimized hesitation, or emergency priority override, etc.). When a lane change is performed under relaxed conditions, the risk of a traffic accident may be reduced, for example, by enabling timely maneuvering in failure situations.

According to an example of the present disclosure, when an event does not occur, the processor 130 may calculate each of the reaction distance, braking distance, or safety distance using each of Equations 1 to 3 (e.g., during normal autonomous driving operation where no fallback or emergency maneuver is required).

According to an example of the present disclosure, when an event occurs, the processor 130 may use an equation other than Equation 1. In this example, a reaction distance smaller than the reaction distance by Equation 1 may be output (e.g., by assuming faster driver/system response, using fixed empirical values, or omitting delay under specific emergency constraints, etc.).

According to an example of the present disclosure, when an event occurs, the processor 130 may use an equation other than Equation 2. In this example, a braking distance smaller than the braking distance by Equation 2 may be output (e.g., based on maximum assumed deceleration, road grip estimation, or compressed safety margins, etc.).

According to an example of the present disclosure, when an event occurs, the processor 130 may use an equation other than Equation 3. In this example, a safety distance smaller than the safety distance by Equation 3 may be output (e.g., setting t_gap to zero, applying a reduced safety buffer, or assuming matched speeds earlier in the stop process, etc.).

For example, as shown in FIG. 7A, the braking distance and the safety distance are the same when an event does not occur and when an event does occur, but the reaction distance when an event occurs may be set smaller than the reaction distance when an event does not occur, for example, to allow for a quicker response time and narrower gap during urgent lane changes.

For example, as shown in FIG. 7B, the reaction distance and the braking distance are the same when an event does not occur and when an event does occur, but the safety distance when an event occurs may be set smaller than the safety distance when an event does not occur (e.g., to allow earlier lane entry in high-risk or time-sensitive situations, etc.).

For example, as shown in FIG. 7C, the braking distance is the same when an event does not occur and when an event does occur, but the sizes of the reaction distance and the safety distance when an event occurs may be set to have a value of zero (0) (e.g., to prioritize immediate execution of a minimal risk maneuver, etc.).

For example, as shown in FIG. 7D, the braking distance is the same when an event does not occur and when an event does occur, but each of the reaction distance and the safety distance when an event occurs may be set smaller than each of the reaction distance and the safety distance when an event does not occur (e.g., to relax constraints under emergency fallback control, etc.).

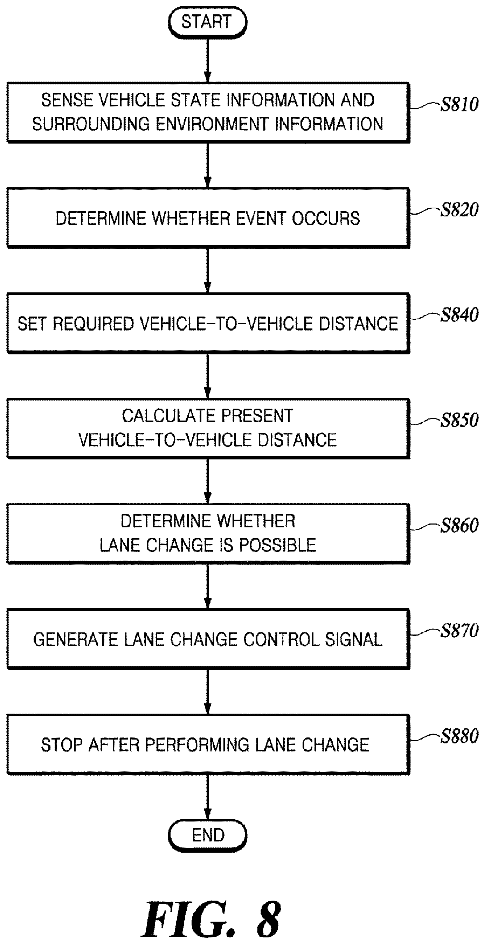

FIG. 8 show an example of a method for controlling a lane change apparatus according to an example of the present disclosure (e.g., performed by software instructions executed by the processor 130, etc.).

Referring to FIG. 8, the apparatus 100 according to an example of the present disclosure performs all or part of processes S810 to S880 in order to control a lane change of the subject vehicle 10, for example, based on sensed conditions, event occurrence, and control logic.

The process S810 will be described. The apparatus 100 may sense the vehicle state information and surrounding environment information of the subject vehicle 10 using the sensor unit 110 and/or the processor 130. For example, the sensor unit 110 may sense the other vehicle 50 driving around the subject vehicle 10 (e.g., its position, speed, lane, or heading direction, etc.).

The process S820 will be described. The processor 130 of the apparatus 100 may determine whether an event occurs. As described above, in a situation where autonomous driving is practically impossible or the MRM is to be performed, the processor 130 may determine that an event has occurred (e.g., sensor malfunction, user non-responsiveness, or failure to meet ODD constraints, etc.).

The process S840 will be described. The processor 130 of the apparatus 100 may set the required vehicle-to-vehicle distance. According to an example of the present disclosure, when an event occurs, the processor 130 may set the required vehicle-to-vehicle distance smaller than when an event does not occur (e.g., to ensure safe yet prompt completion of the MRM, etc.).

According to an example of the present disclosure, the processor 130 may set the size of the reaction distance when an event occurs smaller than that of the reaction distance when an event does not occur (e.g., by modifying $t_{50}$ or using a shorter assumed reaction time, etc.).

According to an example of the present disclosure, the processor 130 may set the size of the safety distance when an event occurs smaller than that of the safety distance when an event does not occur (e.g., by adjusting the t_gap value or allowing a tighter buffer zone, etc.).

According to an example of the present disclosure, the processor 130 may set the values of the reaction distance and the safety distance when an event occurs to 0, and set the required vehicle-to-vehicle distance in consideration only of the braking distance. In this example, the size of the required vehicle-to-vehicle distance is the same as that of the braking distance (e.g., assuming no meaningful delay in response and no safety buffer is necessary, etc.).

The process S850 will be described. The apparatus 100 may calculate the present vehicle-to-vehicle distance, which is a distance between the subject vehicle 10 and the other vehicle 50 on the change target lane, using the processor 130 and/or the sensor unit 110 (e.g., based on LIDAR, RADAR, or camera sensor data, etc.).

The process S860 will be described. The processor 130 of the apparatus 100 determines whether a lane change is possible based on the required vehicle-to-vehicle distance and the present vehicle-to-vehicle distance. When the present vehicle-to-vehicle distance is equal to or greater than the required vehicle-to-vehicle distance, the processor 130 determines that a lane change is possible. When the present vehicle-to-vehicle distance is less than the required vehicle-to-vehicle distance, the processor 130 determines that a lane change is impossible (e.g., due to insufficient gap, fast-approaching traffic, or dynamic risk assessment, etc.).

The process S870 will be described. When it is determined that a lane change is possible, the processor 130 of the apparatus 100 generates a lane change control signal. The subject vehicle 10 is controlled according to the lane change control signal. The lane change control signal may include a first control signal and a second control signal. The first control signal is a lane change control signal generated when an event occurs, for example, in a situation where the MRM is to be performed. The second control signal is a lane change control signal generated when an event does not occur, for example, in a situation where the MRM is not to be performed (e.g., user-initiated lane change under normal conditions).

The process S880 will be described. The subject vehicle 10 stops after performing a lane change according to the lane change control signal of the apparatus 100. Unlike what is illustrated in the process S880 of FIG. 8, the subject vehicle 10 may stop after performing a lane change again or perform a lane change again without immediately stopping after performing a lane change (e.g., to reach a safer zone, avoid a newly detected obstacle, or respond to updated control logic, etc.).

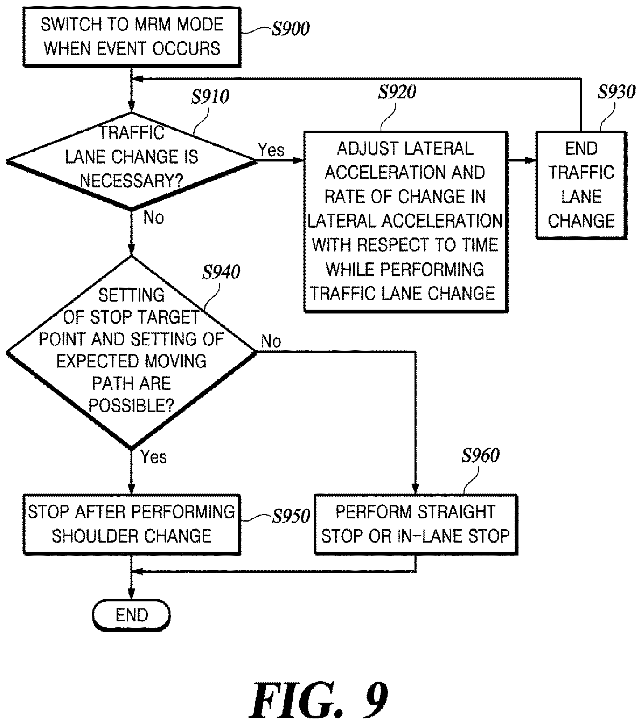

FIG. 9 show an example of a minimal risk maneuver method performed when an event occurs according to an example of the present disclosure (e.g., when a failure, ODD violation, or driver non-responsiveness is detected, etc.).

Referring to FIG. 9, the apparatus 100 according to an example of the present disclosure performs all or part of processes S900 to S960 when an event occurs.

When an event occurs, the processor 130 controls the subject vehicle 10 in an MRM mode to reduce the risk of an accident. Hereinafter, each process of FIG. 9 will be described in detail.

The process S900 will be described. When an event occurs, the apparatus 100 switches to the MRM mode to initiate safe fallback procedures.

The process S910 will be described. When switched to the MRM mode, the processor 130 determines whether a traffic lane change is to be performed. Specifically, the process S910 is a process where the processor 130 determines whether the type of a lane change needed based on a signal of the sensor unit 110 is a traffic lane change or a shoulder change. "Yes" in the process S910 is a case that the processor 130 determines that a traffic lane change is to be performed. "No" in the process S910 is a case that the processor 130 determines that a traffic lane change is not to be performed. In other words, a "no" in the process S910 means that a shoulder change is determined to be performed (e.g., if no adjacent driving lane is available or suitable).

The process S920 will be described. The subject vehicle 10 performs a traffic lane change under the control of the processor 130. While performing a traffic lane change, the processor 130 may adjust the lateral acceleration of the subject vehicle 10 and/or the rate of change (jerk) in the lateral acceleration with respect to time to ensure the maneuver remains safe and perceivable by surrounding vehicles.

According to an example of the present disclosure, the lateral acceleration of the subject vehicle 10 and/or the rate of change in the lateral acceleration with respect to time may be adjusted differently depending on the present vehicle-to-vehicle distance (e.g., larger gaps may allow smoother transitions).

According to an example of the present disclosure, the lateral acceleration and/or the rate of change in the lateral acceleration with respect to time may be adjusted differently depending on the speed of the other vehicle 50 (e.g., to tailor the aggressiveness of the lane change to traffic flow dynamics).

If the driving speed of the other vehicle 50 is lower than or equal to a reference speed value, the processor 130 may adjust the lateral acceleration to a value lower than or equal to a first acceleration. If the driving speed of the other vehicle 50 is lower than or equal to the reference speed value, the processor 130 may adjust the rate of change in the lateral acceleration with respect to time to a value lower than or equal to a first rate of change (e.g., promoting gradual lane entry to avoid alarming slower drivers).

If the driving speed of the other vehicle 50 exceeds the reference speed value, the processor 130 may adjust the lateral acceleration to a value lower than or equal to a second acceleration. If the driving speed of the other vehicle 50 exceeds the reference speed value, the processor 130 may adjust the rate of change in the lateral acceleration with respect to time to a value lower than or equal to a second rate of change (e.g., allowing for a quicker merge to reduce potential collision risk with fast-approaching vehicles).

The second acceleration has a value greater than the first acceleration. The second rate of change has a value greater than the first rate of change. For example, the first acceleration may be 3 $m/s^2$, and the second acceleration may be 5 $m/s^2$. For example, the first rate of change may be 4 $m/s^3$, and the second rate of change may be 6 $m/s^3$. The first acceleration, the second acceleration, the first rate of change, and the second rate of change are not limited to the example values as described above (e.g., values may be dynamically adjusted based on road geometry, vehicle load, or safety policies, etc.).

The apparatus 100 according to an example of the present disclosure controls the subject vehicle 10 to change lanes at a relatively slow speed if the driving speed of the other vehicle 50 is slower, so that a driver of the other vehicle 50 may recognize and prepare for the lane change of the subject vehicle 10 (e.g., allowing more time for situational awareness and response).

The apparatus 100 according to an example of the present disclosure controls the subject vehicle 10 to change lanes at a relatively fast speed if the driving speed of the other vehicle 50 is faster, so that the other vehicle 50 has no room to accelerate and potentially block or interfere with the lane change.

The process S930 will be described. Once the traffic lane change of the subject vehicle 10 is completed, the apparatus 100 re-performs the process S910 to determine whether additional traffic lane changes are to be performed (e.g., to reach a shoulder, designated stop zone, or exit ramp, etc.).

The process S940 will be described. If it is determined that a shoulder change is to be performed (S910, no), the processor 130 determines whether a stop target point on the shoulder and an expected moving path to the stop target point may be set (e.g., based on available shoulder width, road markings, or GPS/map data, etc.).

The process S950 will be described. If the setting of the stop target point or the setting of the expected moving path is possible (S940, yes), the subject vehicle 10 performs a shoulder change along the expected moving path under the control of the processor 130 to stop at the stop target point (e.g., a designated minimal risk condition zone).

The process S960 will be described. If the setting of the stop target point fails or the setting of the expected moving path fails (S940, no), the subject vehicle 10 performs a straight stop or an in-lane stop under the control of the processor 130 (e.g., due to lack of safe shoulder space, unclear markings, or blocked path, etc.).

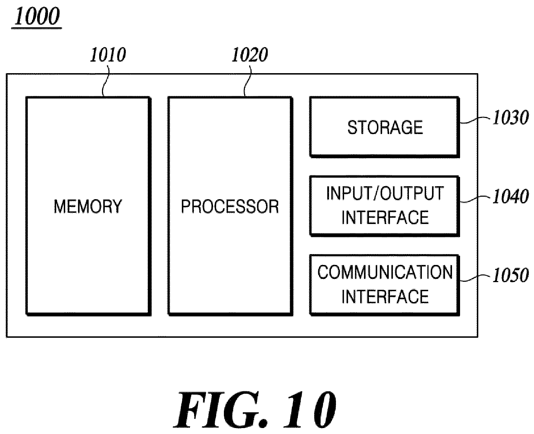

FIG. 10 shows an exemplary computing device capable of being used to implement the method or apparatus according to an example of the present disclosure (e.g., for executing lane change control logic, MRM evaluation, or sensor data processing, etc.).

A computing device 1000 may include all or part of a memory 1010, a processor 1020, a storage 1030, an input/output interface 1040, and a communication interface 1050. The computing device 1000 may structurally and/or functionally include at least a part of the apparatus 100. The computing device 1000 may be a stationary computing device such as a desktop computer, a server, an edge computing node, or a simulation workstation, etc., as well as a mobile computing device such as a laptop computer, a smart phone, a vehicle electrical device, an advanced driver-assistance system (ADAS) control device, or an in-vehicle infotainment system, etc.

The memory 1010 may store a program that causes the processor 1020 to perform a method or operation according to various examples of the present disclosure. For example, the program may include a plurality of commands executable by the processor 1020, and the above-described method or operation may be performed by executing the plurality of commands by the processor 1020. The memory 1010 may be a single memory or a plurality of memories. In this example, information required to perform the method or operation according to various examples of the present disclosure may be stored in a single memory or may be divided and stored in a plurality of memories. When the memory 1010 is configured of a plurality of memories, the plurality of memories may be physically separated (e.g., distributed among different hardware modules or located in different physical components such as a GPU or microcontroller). The memory 1010 may include at least one of a volatile memory and a nonvolatile memory. The volatile memory may include a static random access memory (SRAM) or a dynamic random access memory (DRAM), and the nonvolatile memory may include a flash memory, ferroelectric RAM (FRAM), magnetoresistive RAM (MRAM), phase-change memory (PCM), and the like.

The processor 1020 may include at least one core capable of executing at least one command. The processor 1020 may execute commands stored in the memory 1010. The processor 1020 may be a single processor or multiple processors (e.g., a multicore CPU, GPU, digital signal processor (DSP), or application-specific integrated circuit (ASIC), etc.).

The storage 1030 maintains stored data even when power supplied to the computing device 1000 is cut off. For example, the storage 1030 may include nonvolatile memory, and may include storage media such as magnetic tape, optical disk, or magnetic disk (e.g., HDD, SSD, CD-ROM, DVD, Blu-ray, etc.). The program stored in the storage 1030 may be loaded into the memory 1010 before being executed by the processor 1020. The storage 1030 may store a file written in a program language, and a program generated from the file by a compiler or the like may be loaded into the memory 1010. The storage 1030 may store data to be processed by the processor 1020 and/or data processed by the processor 1020 (e.g.,

lane geometry data, MRM thresholds, event logs, or sensor fusion outputs, etc.).

The input/output interface 1040 may provide an interface with an input device such as a keyboard, a mouse, etc., and/or an output device such as a display device, a printer, an HMI touch panel, etc. A user may trigger execution of a program by the processor 1020 through an input device and/or check the processing result of the processor 1020 through an output device (e.g., visual feedback for lane change decisions or emergency state alerts).

The communication interface 1050 may provide access to an external network. The computing device 1000 may communicate with other devices through the communication interface 1050 using wireless or wired protocols (e.g., Ethernet, Wi-Fi, Bluetooth, cellular, DSRC, or V2X communication standards, etc.).

A main aspect of the present disclosure is directed to providing an apparatus and method capable of performing a minimum risk maneuver (MRM) in the event of an issue with a vehicle and/or the surrounding environment of the vehicle.

In addition, a main aspect of the present disclosure is directed to protecting passengers and vehicles by performing the MRM.

In addition, a main aspect of the present disclosure is directed to providing an apparatus and method for changing lanes.

The aspects of the present disclosure are not limited to those mentioned above, and other aspects not mentioned herein will be clearly understood by those skilled in the art from the following description.

An apparatus configured to control a lane change of an subject vehicle, the apparatus comprising: a sensor unit which senses vehicle state information of the subject vehicle and surrounding environment information of the subject vehicle; and a processor which controls driving of the subject vehicle and generates a lane change control signal based on a present vehicle-to-vehicle distance between another vehicle and the subject vehicle on a change target lane and a required vehicle-to-vehicle distance, which is a minimum distance between the other vehicle and the subject vehicle required for the lane change, wherein the lane change control signal comprises a first control signal generated if an event occurs and a second control signal generated if the event does not occur.

A method for controlling a lane change of an subject vehicle, the method comprising: sensing, by a sensor unit, vehicle state information of the subject vehicle and surrounding environment information of the subject vehicle; and generating, by a processor which controls driving of the subject vehicle, a lane change control signal based on a present vehicle-to-vehicle distance between another vehicle and the subject vehicle on a change target lane and a required vehicle-to-vehicle distance, which is a minimum distance between the other vehicle and the subject vehicle required for the lane change, wherein the lane change control signal comprises a first control signal generated if an event occurs and a second control signal generated if the event does not occur.

As described above, the apparatus according to an example of the present disclosure can perform a minimum risk maneuver (MRM) on an subject vehicle in the event of an issue with the subject vehicle and/or the surrounding environment of the subject vehicle.

In addition, the apparatus according to an example of the present disclosure can protect the subject vehicle and passengers by performing the MRM.

In addition, the apparatus according to an example of the present disclosure can change lanes in the event of an issue with the subject vehicle and/or the surrounding environment of the subject vehicle.

In addition, the apparatus according to an example of the present disclosure can adjust the size of a required vehicle-to-vehicle distance so that lane changes of the subject vehicle can be performed under relaxed conditions.

In addition, the apparatus according to an example of the present disclosure can safely stop the subject vehicle in the event of an issue with the subject vehicle and/or the surrounding environment of the subject vehicle.

Various implementations of systems and techniques described herein may be realized as digital electronic circuits, integrated circuits, field programmable gate arrays (FPGAs), application specific integrated circuits (ASICs), computer hardware, firmware, software, and/or combinations thereof. These various implementations may include one or more computer programs executable on a programmable system. The programmable system includes at least one programmable processor (which may be a special-purpose processor or a general-purpose processor) coupled to receive and transmit data and instructions from and to a storage system, at least one input device, and at least one output device. The computer programs (also known as programs, software, software applications or codes) contain commands for a programmable processor and are stored in a "computer-readable recording medium".

The computer-readable recording medium includes all types of recording devices in which data readable by a computer system is stored. Such a computer-readable recording medium may be a non-volatile or non-transitory medium, such as ROM, CD-ROM, magnetic tape, floppy disk, memory card, hard disk, magneto-optical disk, or a storage device, and may further include a transitory medium such as a data transmission medium. In addition, the computer-readable recording medium may be distributed in a computer system connected via a network, so that computer-readable codes may be stored and executed in a distributed manner.

Various implementations of systems and techniques described herein may be embodied by a programmable computer. Here, the computer includes a programmable processor, a data storage system (including volatile memory, non-volatile memory, or other types of storage systems, or combinations thereof) and at least one communication interface. For example, the programmable computer may be one of a server, a network device, a set top box, an embedded device, a computer expansion module, a personal computer, a laptop, a personal data assistant (PDA), a cloud computing system, or a mobile device.

Although examples of the present disclosure have been described for illustrative purposes, those having ordinary skill in the art should appreciate that various modifications, additions, and substitutions are possible, without departing from the idea and scope of the present disclosure. Therefore, examples of the present disclosure have been described for the sake of brevity and clarity. The scope of the technical idea of the present examples is not limited by the illustrations. Accordingly, one of ordinary skill should understand that the scope of the present disclosure should not be limited by the above explicitly described examples but by the claims and equivalents thereof.

## Claims

1. An apparatus of a vehicle, the apparatus comprising:

   a processor; and
   a memory storing at least one instruction that, when executed by the processor communicating with the memory, is configured to cause the apparatus to:

      obtain, using a sensor, vehicle state information of the vehicle and surrounding environment information of the vehicle;
      determine, based on the vehicle state information and the surrounding environment information, a present vehicle-to-vehicle distance and a required vehicle-to-vehicle distance, wherein the present vehicle-to-vehicle distance is a present distance between the vehicle and another vehicle, and wherein the required vehicle-to-vehicle distance is a threshold distance, between the vehicle and the other vehicle, required for the vehicle to perform a lane change to a target lane,
      generate, based on the present vehicle-to-vehicle distance and the required vehicle-to-vehicle distance, a lane change control signal, wherein the lane change control signal comprises:

         a first control signal generated based on an occurrence of a predefined event, or

         a second control signal generated based on an absence of the predefined event; and

      control, based on the lane change control signal, driving of the vehicle.

2. The apparatus of claim **1,** wherein the at least one instruction, when executed by the processor communicating with the memory, is configured to cause the apparatus to determine the required vehicle-to-vehicle distance:

   by setting, based on the first control signal, a first required vehicle-to-vehicle distance to be the required vehicle-to-vehicle distance, or
   by setting, based on the second control signal, a second required vehicle-to-vehicle distance to be the required vehicle-to-vehicle distance, wherein the first required vehicle-to-vehicle distance is shorter than the second required vehicle-to-vehicle distance.

3. The apparatus of claim 1 or 2, wherein the at least one instruction, when executed by the processor communicating with the memory, is configured to cause the apparatus to:

   set a reaction distance, wherein the reaction distance corresponds to a first reaction distance associated with the first control signal or a second reaction distance associated with the second control signal, and wherein the first reaction distance is shorter than the second reaction distance; and
   set, based on a sum of the reaction distance, a braking distance, and a safety distance, the required vehicle-to-vehicle distance, and wherein:

      the reaction distance is a distance by which a gap between the vehicle and the other vehicle is reduced from a point the vehicle begins to move laterally until the other vehicle starts braking;
      the braking distance is a distance by which a gap between the vehicle and the other vehicle is reduced while the other vehicle is braking; and
      the safety distance is a distance between the vehicle and the other vehicle at a time when the braking of the other vehicle is completed.

4. The apparatus of any one of claims 1 to 3, wherein the at least one instruction, when executed by the processor communicating with the memory, is configured to cause the apparatus to:

set a safety distance, wherein the safety distance corresponds to a first safety distance associated with the first control signal or a second safety distance associated with the second control signal, and wherein the first safety distance is shorter than the second safety distance; and set, based on a sum of a reaction distance, a braking distance, and the safety distance, the required vehicle-to-vehicle distance, and wherein:

the reaction distance is a distance by which a gap between the vehicle and the other vehicle is reduced from a point the vehicle begins to move laterally until the other vehicle starts braking;
the braking distance is a distance by which a gap between the vehicle and the other vehicle is reduced while the other vehicle is braking; and
the safety distance is a distance between the vehicle and the other vehicle at a time when the braking of the other vehicle is completed.

5. The apparatus of claim 3 or 4, wherein, the at least one instruction, when executed by the processor communicating with the memory, is configured to cause the apparatus to set, based on the occurrence of the predefined event, the braking distance as the required vehicle-to-vehicle distance.

6. The apparatus of any one of claims 1 to 5, wherein the lane change comprises:

a traffic lane change in which the vehicle moves from a current lane to an adjacent lane, and
a shoulder change in which the vehicle moves from the current lane to a shoulder, and wherein:
based on the occurrence of the predefined event, the at least one instruction, when executed by the processor communicating with the memory, is configured to cause the apparatus to:

determine, based on a signal of the sensor, whether to perform the traffic lane change or the shoulder change; and
based on a determination to perform the traffic lane change, adjust a lateral acceleration of the vehicle differently based on the present vehicle-to-vehicle distance while performing the traffic lane change,
preferably wherein, based on the other vehicle driving at a speed lower than or equal to a reference speed value, the at least one instruction, when executed by the processor communicating with the memory, is configured to cause the apparatus to adjust the lateral acceleration of the vehicle to a value lower than or equal to a first acceleration while performing the traffic lane change,
more preferably wherein, based on the other vehicle driving at a speed exceeding the reference speed value, the at least one instruction, when executed by the processor communicating with the memory, is configured to cause the apparatus to adjust the lateral acceleration of the vehicle to a value lower than or equal to a second acceleration while performing the traffic lane change, and wherein the second acceleration has a value greater than the first acceleration.

7. The apparatus of any one of claims 1 to 6, wherein the lane change comprises:

a traffic lane change in which the vehicle moves from a current lane to an adjacent lane, and
a shoulder change in which the vehicle moves from the current lane to a shoulder, and wherein:
based on the occurrence of the predefined event, the at least one instruction, when executed by the processor communicating with the memory, is configured to cause the apparatus to:

determine, based on a signal of the sensor, whether to perform the traffic lane change or the shoulder change; and
based on a determination to perform the shoulder change, set a stop target point on the shoulder and set an expected moving path to the stop target point,
preferably wherein, based on a failure of the setting of the stop target point or the setting of the expected moving path, the at least one instruction, when executed by the processor communicating with the memory, is configured to cause the apparatus to control the vehicle to perform a straight stop or an in-lane stop.

8. A method performed by an apparatus of a vehicle, the method comprising:

obtaining, using a sensor, vehicle state information of the vehicle and surrounding environment information of the vehicle;
determining, based on the vehicle state information and the surrounding environment information, a present vehicle-to-vehicle distance and a required vehicle-to-vehicle distance, wherein the present vehicle-to-vehicle distance is a present distance between the vehicle and another vehicle, and wherein the required vehicle-to-vehicle distance is a threshold distance, between the vehicle and the other vehicle, required for the vehicle to perform a lane change to a target lane;

generating, based on the present vehicle-to-vehicle distance and the required vehicle-to-vehicle distance, a lane change control signal, wherein the lane change control signal comprises:

a first control signal generated based on an occurrence of a predefined event, or a second control signal generated based on an absence of the predefined event; and

controlling, based on the lane change control signal, driving of the vehicle.

9. The method of claim 8, wherein the determining the required vehicle-to-vehicle distance comprises:

setting, based on the first control signal, a first required vehicle-to-vehicle distance to be the required vehicle-to-vehicle distance; or setting, based on the second control signal, a second required vehicle-to-vehicle distance to be the required vehicle-to-vehicle distance, wherein the first required vehicle-to-vehicle distance is shorter than the second required vehicle-to-vehicle distance.

10. An apparatus comprising:

a processor; and a memory storing at least one instruction that, when executed by the processor communicating with the memory, is configured to cause the apparatus to:

detect an event affecting autonomous driving of a vehicle; determine, based on the event, a target lane for a lane change; adjust, based on an occurrence of the event, a required inter-vehicle distance; generate, based on a measured inter-vehicle distance satisfying the required inter-vehicle distance, an autonomous driving control signal; and control, based on the autonomous driving control signal, the autonomous driving of the vehicle to perform the lane change.

11. The apparatus of claim 10, wherein the target lane comprises a shoulder lane, and the autonomous driving control signal is configured to cause the vehicle to stop at a target point on the shoulder lane.

12. The apparatus of claim 10 or **11,** wherein the at least one instruction that, when executed by the processor communicating with the memory, is configured to cause the apparatus to:

adjust the required inter-vehicle distance by reducing at least one of: a reaction distance, a braking distance, or a safety distance, and/or generate the autonomous driving control signal based on a multi-phase lane change process, wherein the multi-phase lane change process comprises an initiation phase, a partial lateral movement phase, and a completion phase.

13. The apparatus of any one of claims 10 to 12, wherein the at least one instruction that, when executed by the processor communicating with the memory, is configured to cause the apparatus to generate the autonomous driving control signal based on a speed of another vehicle within a threshold distance from the vehicle.

14. The apparatus of any one of claims 10 to 13, wherein the event comprises at least one of: a sensor malfunction, degradation of driving function, detection of an out-of-design-domain condition, or lack of driver responsiveness.

15. The apparatus of any one of claims 10 to 14, wherein the at least one instruction that, when executed by the processor communicating with the memory, is configured to cause the apparatus to:

perform a fallback maneuver based on a determination that the lane change cannot be completed, wherein the fallback maneuver comprises at least one of an in-lane stop or a straight stop, and/or activate, based on a current phase of the lane change, a turn indicator or an emergency flasher.

*100*

LANE CHANGE
APPARATUS

| SENSOR UNIT | *110* |

| PROCESSOR | *130* |

| HMI | *140* |

| TRANSCEIVER | *150* |

| LAMP | *160* |

# FIG. 1

**FIG. 2A**

**FIG. 2B**

FIG. 2C

**FIG. 2D**

Lane 1    Lane 2    Lane 3    Lane 4    Shoulder

Line 1    Line 2    Line 3    Line 4

## FIG. 3

Lane 1 | Lane 2 | Lane 3 | Lane 4 | Shoulder

Line 1 | Line 2 | Line 3 | Line 4

*10*

# FIG. 4

**FIG. 5**

**FIG. 6**

**FIG. 7A**

**FIG. 7B**

**FIG. 7C**

# FIG. 7D

START

SENSE VEHICLE STATE INFORMATION AND
SURROUNDING ENVIRONMENT INFORMATION — S810

DETERMINE WHETHER EVENT OCCURS — S820

SET REQUIRED VEHICLE–TO–VEHICLE DISTANCE — S840

CALCULATE PRESENT
VEHICLE–TO–VEHICLE DISTANCE — S850

DETERMINE WHETHER
LANE CHANGE IS POSSIBLE — S860

GENERATE LANE CHANGE CONTROL SIGNAL — S870

STOP AFTER PERFORMING LANE CHANGE — S880

END

# FIG. 8

SWITCH TO MRM MODE WHEN EVENT OCCURS ~S900

TRAFFIC LANE CHANGE IS NECESSARY? S910

Yes

ADJUST LATERAL ACCELERATION AND RATE OF CHANGE IN LATERAL ACCELERATION WITH RESPECT TO TIME WHILE PERFORMING TRAFFIC LANE CHANGE S920

END TRAFFIC LANE CHANGE S930

No

SETTING OF STOP TARGET POINT AND SETTING OF EXPECTED MOVING PATH ARE POSSIBLE? S940

No

Yes

STOP AFTER PERFORMING SHOULDER CHANGE ~S950

PERFORM STRAIGHT STOP OR IN-LANE STOP S960

END

# FIG. 9

_1000_

_1010_ _1020_

| MEMORY | PROCESSOR | STORAGE ~_1030_ |
| | | INPUT/OUTPUT INTERFACE ~_1040_ |
| | | COMMUNICATION INTERFACE ~_1050_ |

*FIG. 10*

## PARTIAL EUROPEAN SEARCH REPORT

under Rule 62a and/or 63 of the European Patent Convention.
This report shall be considered, for the purposes of
subsequent proceedings, as the European search report

**Application Number**

EP 25 17 0041

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | FR 3 102 128 A1 (PSA AUTOMOBILES SA [FR]) 23 April 2021 (2021-04-23) | 1,2,8,9 | INV. B60W30/16 |
| A | * paragraphs [0052] - [0058]; figures 1-3, 8 * | 3-7 | B60W30/18 B60W50/02 |
| | ----- | | B60W60/00 |
| A | US 10 836 394 B2 (HYUNDAI MOTOR CO LTD [KR]; KIA MOTORS CORP [KR]) 17 November 2020 (2020-11-17) * the whole document * | 3-5 | |
| | ----- | | |
| A | US 2024/001915 A1 (YUN CHEOL HWAN [KR] ET AL) 4 January 2024 (2024-01-04) * the whole document * | 6,7 | |
| | ----- | | |
| A | US 11 235 760 B2 (HITACHI AUTOMOTIVE SYSTEMS LTD [JP]) 1 February 2022 (2022-02-01) * the whole document * | 1-9 | |
| | ----- | | |

**TECHNICAL FIELDS SEARCHED (IPC)**

B60W

### INCOMPLETE SEARCH

The Search Division considers that the present application, or one or more of its claims, does/do not comply with the EPC so that only a partial search (R.62a, 63) has been carried out.

Claims searched completely :

Claims searched incompletely :

Claims not searched :

Reason for the limitation of the search:

see sheet C

| Place of search | Date of completion of the search | Examiner |
|---|---|---|
| Munich | 8 October 2025 | Granier, Frédéric |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

\& : member of the same patent family, corresponding document

EPO FORM 1503 03.82 (P04E07)

Europäisches
Patentamt

European
Patent Office

Office européen
des brevets

**INCOMPLETE SEARCH
SHEET C**

```
Claim(s) completely searchable:
        1-9

Claim(s) not searched:
        10-15

Reason for the limitation of the search:

The search has been restricted to the subject-matter indicated by the
applicant in his letter of 26-09-2025 filed in reply to the invitation
pursuant to Rule 62a(1) EPC.
```

## ANNEX TO THE EUROPEAN SEARCH REPORT
## ON EUROPEAN PATENT APPLICATION NO.

EP 25 17 0041

This annex lists the patent family members relating to the patent documents cited in the above-mentioned European search report.
The members are as contained in the European Patent Office EDP file on
The European Patent Office is in no way liable for these particulars which are merely given for the purpose of information.

08-10-2025

| Patent document cited in search report | | Publication date | Patent family member(s) | | Publication date |
|---|---|---|---|---|---|
| FR 3102128 | A1 | 23-04-2021 | NONE | | |
| US 10836394 | B2 | 17-11-2020 | CN | 110371119 A | 25-10-2019 |
| | | | EP | 3552896 A1 | 16-10-2019 |
| | | | US | 2019315360 A1 | 17-10-2019 |
| US 2024001915 | A1 | 04-01-2024 | CN | 117302215 A | 29-12-2023 |
| | | | DE | 102023203305 A1 | 04-01-2024 |
| | | | KR | 20240003030 A | 08-01-2024 |
| | | | US | 2024001915 A1 | 04-01-2024 |
| US 11235760 | B2 | 01-02-2022 | CN | 108025751 A | 11-05-2018 |
| | | | EP | 3345800 A1 | 11-07-2018 |
| | | | EP | 3689700 A1 | 05-08-2020 |
| | | | JP | 6803657 B2 | 23-12-2020 |
| | | | JP | 2017047694 A | 09-03-2017 |
| | | | US | 2018170374 A1 | 21-06-2018 |
| | | | WO | 2017038289 A1 | 09-03-2017 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

• KR 1020240048935

• KR 1020250006104